# EUROPÄISCHE PATENTSCHRIFT

(11) **EP 3 224 494 B1**
(45) Veröffentlichungstag und Bekanntmachung des Hinweises auf die Patenterteilung: **09.01.2019**
(21) Anmeldenummer: 15831048.2
(22) Anmeldetag: 27.11.2015
(51) Int. Cl.: F16D 13/52, F16D 13/54, F16D 13/56, F16D 25/0638

(54) **KUPPLUNGSEINRICHTUNG**
CLUTCH DEVICE
SYSTÈME D'EMBRAYAGE

(30) Priorität: 28.11.2014 DE 102014224374; 03.06.2015 DE 102015210239
(43) Veröffentlichungstag der Anmeldung: 04.10.2017
(73) Patentinhaber: Schaeffler Technologies AG & Co. KG, 91074 Herzogenaurach (DE)
(72) Erfinder: CHAMBRION, Martin, 67150 Erstein (FR); SCHMID, Tim, 76316 Malsch (DE); RUF, Johannes, 77815 Bühl (DE); RABER, Christoph, 66564 Ottweiler-Steinbach (DE)
(86) Internationale Anmeldenummer: PCT/DE2015/200521
(87) Internationale Veröffentlichungsnummer: WO 2016/082832

(56) Entgegenhaltungen:
- DE-A1-102014 203 954
- GB-A- 2 313 169
- US-A1- 2006 223 640

## Beschreibung

Die Erfindung betrifft eine Kupplungseinrichtung gemäß dem Oberbegriff des Patentanspruchs 1.

Aus der DE 10 2014 203 954 A1 ist eine selbstverstärkende Kupplungseinrichtung bekannt, die auf den Oberbegriff des Patentanspruchs 1 lesbar ist. Die Kupplungseinrichtung weist eine Verstärkungseinrichtung auf, die eine Anpresskraft eines Ausrücksystems für das zu übertragende Drehmoment der Kupplungseinrichtung verstärkt.

Es ist Aufgabe der Erfindung, eine verbesserte Kupplungseinrichtung bereitzustellen.

Diese Aufgabe wird mittels einer Kupplungseinrichtung gemäß Patentanspruch 1 gelöst. Vorteilhafte Ausführungsformen sind in den abhängigen Ansprüchen angegeben.

Erfindungsgemäß wurde erkannt, dass eine verbesserte Kupplungseinrichtung dadurch bereitgestellt werden kann, dass die Kupplungseinrichtung drehbar um eine Drehachse lagerbar ist und eine Eingangsseite, eine Ausgangsseite, wenigstens ein Reibpaket mit wenigstens einem ersten Reibpartner und wenigstens einem zweiten Reibpartner sowie eine Verstärkungseinrichtung aufweist. Der erste Reibpartner ist drehmomentschlüssig mit der Eingangsseite verbunden. Der zweite Reibpartner ist drehmomentschlüssig mit der Ausgangsseite verbunden. Der erste und der zweite Reibpartner sind durch eine Anpresskraft in Reibeingriff bringbar, um ein Drehmoment zwischen der Eingangsseite und der Ausgangsseite zu ertragen. Die Verstärkungseinrichtung ist ausgebildet, die Anpresskraft mit einer Verstärkungskraft zu beaufschlagen. Ferner ist eine Begrenzungseinrichtung vorgesehen. Die Begrenzungseinrichtung ist ausgebildet, die Anpresskraft und/oder die Verstärkungskraft zumindest teilweise zu begrenzen.

Dadurch wird vermieden, dass in einem Antriebsstrang, in dem Kupplungseinrichtung angeordnet ist, Komponenten des Antriebsstrangs durch ein Moment, das größer ist als ein maximal mit dem Antriebsstrang zu übertragendes Drehmoment, überlastet werden, und somit die Komponenten, aber auch die Kupplungseinrichtung vor Überlastung geschützt sind.

Besonders von Vorteil ist hierbei, wenn eine Abstützeinrichtung vorgesehen ist, wobei die Abstützeinrichtung mit der Ausgangsseite gekoppelt und ausgebildet ist, eine Gegenkraft zur Anpresskraft bereitzustellen, um den Reibeingriff zwischen dem ersten und dem zweiten Reibpartner zu bewirken, wobei die Begrenzungseinrichtung zwischen der Abstützeinrichtung und dem Reibpaket angeordnet ist. Zusätzlich oder alternativ ist auch denkbar, dass die Begrenzungseinrichtung zwischen der Ausgangsseite und der Abstützeinrichtung angeordnet ist.

In einer weiteren Ausführungsform ist eine Anpresseinrichtung vorgesehen. Die Anpresseinrichtung ist ausgebildet, die Anpresskraft bereitzustellen. Die Begrenzungseinrichtung ist zwischen dem Reibpaket und der Anpresseinrichtung angeordnet. Diese Ausgestaltung hat den Vorteil, dass in axialer Richtung die Kupplungseinrichtung besonders schlank ausgebildet ist.

In einer weiteren Ausführungsform ist die Begrenzungseinrichtung zwischen der Verstärkungseinrichtung und der Ausgangsseite angeordnet.

Die Ausgangsseite weist eine Ausgangswelle und ein Ausgangselement auf, wobei das Ausgangselement mit der Ausgangswelle zumindest in eine axiale Richtung gekoppelt ist. Ferner ist eine Nabe vorgesehen, die drehmomentschlüssig mit der Ausgangswelle verbunden und axial verschiebbar gegenüber der Ausgangswelle ist. Zwischen der Nabe und dem Ausgangselement ist die Begrenzungseinrichtung angeordnet.

Die Begrenzungseinrichtung umfasst wenigstens ein Federmittel. Das Federmittel ist als Druckfeder oder als Tellerfeder oder als Zugfeder oder als Blattfeder ausgebildet.

Das Federmittel ist mit einer Vorspannkraft vorgespannt. Die Vorspannkraft weist einen Wert auf, der einer Summe der Anpresskraft und einem vordefinierten Wert der Verstärkungskraft entspricht. Dadurch wird gewährleistet, dass die Begrenzungseinrichtung ab einem bestimmten Wert der Summe der Anpresskraft und dem vordefinierten Wert der Verstärkungskraft auslöst.

In einer weiteren Ausführungsform ist ein Lamellenträger vorgesehen , wobei der Lamellenträger drehmomentschlüssig mit dem zweiten Reibpartner und der Ausgangsseite gekoppelt ist, wobei ein Anschlagsmittel vorgesehen ist, wobei das Anschlagsmittel angrenzend an den zweiten Reibpartner auf einer zum Federmittel gegenüberliegenden Seite des zweiten Reibpartners angeordnet ist und mit dem Lamellenträger gekoppelt ist, wobei der zweite Reibpartner axial verschiebbar gegenüber dem Lamellenträger ist, wobei das Anschlagsmittel ausgebildet ist, die axiale Verschiebbarkeit des zweiten Reibpartners gegenüber dem Lamellenträger durch ein Anschlagen des zweiten Reibpartners am Anschlagsmittel zu begrenzen. Diese Ausgestaltung hat ferner den Vorteil, dass das Federmittel vorgespannt montiert werden kann und die Vorspannung in der Montage auf einfache Weise aufrechterhalten werden kann.

In einer weiteren Ausführungsform ist ein Lamellenträger vorgesehen ist, wobei der Lamellenträger drehmomentschlüssig mit dem zweiten Reibpartner und der Ausgangsseite gekoppelt ist, wobei eine Anpresseinrichtung und ein Koppelmittel vorgesehen ist, wobei die Anpresseinrichtung axial angrenzend an das Reibpaket angeordnet und ausgebildet ist, die Anpresskraft bereitzustellen, wobei das Anschlagsmittel mit dem Lamellenträger gekoppelt ist, wobei der zweite Reibpartner axial verschiebbar gegenüber dem Lamellenträger ist, wobei axial zwischen dem Koppelmittel und der Anpresseinrichtung die Begrenzungseinrichtung angeordnet ist, wobei das Koppelmittel ausgebildet ist, die Begrenzungseinrichtung abzustützen.

In einer weiteren Ausführungsform sind ein Anschlagsmittel und eine Nabe vorgesehen, wobei das Anschlagsmittel mit der Nabe gekoppelt ist, wobei der Lamellenträger drehmomentschlüssig mit dem zweiten Reibpartner und drehmomentschlüssig mit der Verstärkungseinrichtung verbunden ist, wobei die Nabe drehmomentschlüssig mit der Ausgangsseite verbunden ist, wobei die Verstärkungseinrichtung eine Anpressscheibe umfasst, die drehmomentschlüssig und axial verschiebbar mit der Nabe gekoppelt ist, wobei das Anschlagsmittel ausgebildet ist, die relative Verschiebbarkeit der Anpressscheibe gegenüber der Nabe durch ein Anschlagen der Anpressscheibe an dem Anschlagsmittel zu begrenzen.

In einer weiteren Ausführungsform ist eine Nabe und ein Lamellenträger vorgesehen, wobei der Lamellenträger drehmomentschlüssig mit dem zweiten Reibpartner und über die Verstärkungseinrichtung drehmomentschlüssig mit der Nabe verbunden ist, wobei die Nabe drehmomentschlüssig mit der Ausgangsseite verbunden ist, wobei der Lamellenträger axial relativ verschiebbar gegenüber der Nabe ist, wobei ein weiteres Anschlagsmittel vorgesehen ist, wobei das weitere Anschlagsmittel ausgebildet ist, die relative Verschiebbarkeit des Lamellenträgers gegenüber der Nabe durch ein Anschlagen des weiteren Anschlagsmittel an der Verstärkungseinrichtung zu begrenzen.

In einer weiteren Ausführungsform ist ein Lamellenträger vorgesehen, wobei der Lamellenträger drehmomentschlüssig mit dem zweiten Reibpartner und der Ausgangsseite verbunden ist, wobei ein weiteres Anschlagsmittel vorgesehen ist, wobei die Anpresseinrichtung relativ gegenüber dem Lamellenträger bewegbar ist, wobei das weitere Anschlagsmittel ausgebildet ist, durch ein Anschlagen der Anpresseinrichtung an dem Lamellenträger die Bewegbarkeit der Anpresseinrichtung gegenüber dem Lamellenträger zumindest teilweise zu begrenzen. Auf diese Weise wird ein Überdrücken des Federmittels durch die Anpresseinrichtung vermieden, sodass das Federmittel nicht beschädigt wird.

Nachfolgend wird die Erfindung anhand von Figuren näher erläutert. Dabei zeigen:
- Figur 1: eine schematische Darstellung eines Halblängsschnitts durch eine Kupplungseinrichtung gemäß einer ersten Ausführungsform;
- Figur 2: eine schematische Darstellung eines Halblängsschnitts durch eine Kupplungseinrichtung gemäß einer zweiten Ausführungsform;
- Figur 3: eine schematische Darstellung eines Halblängsschnitts durch eine Kupplungseinrichtung gemäß einer dritten Ausführungsform;
- Figur 4: eine Schnittansicht eine Kupplungseinrichtung gemäß einer vierten Ausführungsform;
- Figur 5: einen Ausschnitt der in Figur 4 gezeigten Kupplungseinrichtung;
- Figur 6: eine schematische Darstellung eines Halblängsschnitts durch eine Kupplungseinrichtung gemäß einer fünften Ausführungsform;
- Figur 7: eine schematische Darstellung eines Halblängsschnitts durch eine Kupplungseinrichtung gemäß einer sechsten Ausführungsform;
- Figur 8: eine schematische Darstellung eines Halblängsschnitts durch eine Kupplungseinrichtung gemäß einer siebten Ausführungsform;
- Figur 9: eine schematische Darstellung eines Halblängsschnitts durch eine Kupplungseinrichtung gemäß einer achten Ausführungsform;
- Figur 10: eine schematische Darstellung eines Halblängsschnitts durch eine Kupplungseinrichtung gemäß einer neunten Ausführungsform;
- Figur 11: eine schematische Darstellung eines Halblängsschnitts durch eine Kupplungseinrichtung gemäß einer zehnten Ausführungsform;
- Figur 12: eine schematische Darstellung eines Halblängsschnitts durch eine Kupplungseinrichtung gemäß einer elften Ausführungsform;
- Figur 13: eine schematische Darstellung eines Halblängsschnitts durch eine Kupplungseinrichtung gemäß einer zwölften Ausführungsform;
- Figur 14: eine schematische Darstellung eines Halblängsschnitts durch eine Kupplungseinrichtung gemäß einer dreizehnten Ausführungsform;
- Figur 15: eine schematische Darstellung eines Halblängsschnitts durch eine Kupplungseinrichtung gemäß einer 14. Ausführungsform;
- Figur 16: eine schematische Darstellung eines Halblängsschnitts durch eine Kupplungseinrichtung gemäß einer 15. Ausführungsform;
- Figur 17: eine schematische Darstellung eines Halblängsschnitts durch eine Kupplungseinrichtung gemäß einer 16. Ausführungsform;
- Figur 18: einen Ausschnitt der in Figur 17 gezeigten Kupplungseinrichtung;
- Figur 19: eine schematische Darstellung eines Halblängsschnitts durch eine Kupplungseinrichtung gemäß einer 17. Ausführungsform;
- Figur 20: eine schematische Darstellung eines Halblängsschnitts durch eine Kupplungseinrichtung gemäß einer 18. Ausführungsform;
- Figur 21: eine schematische Darstellung eines Halblängsschnitts durch eine Kupplungseinrichtung gemäß einer 19. Ausführungsform;
- Figur 22: eine schematische Darstellung eines Halblängsschnitts durch eine Kupplungseinrichtung gemäß einer 20. Ausführungsform; und
- Figur 23: eine schematische Darstellung eines Halblängsschnitts durch eine Kupplungseinrichtung gemäß einer 21. Ausführungsform.

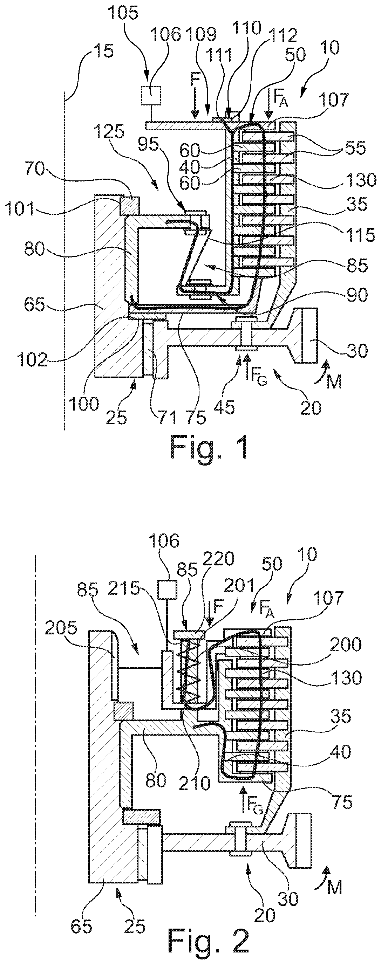

Figur 1 zeigt eine schematische Darstellung einer Kupplungseinrichtung 10 gemäß einer ersten Ausführungsform für einen Antriebsstrang eines Kraftfahrzeugs.

Die Kupplungseinrichtung 10 ist drehbar um eine Drehachse 15 lagerbar. Die Kupplungseinrichtung 10 weist eine Eingangsseite 20 und eine Ausgangsseite 25 auf. Die Eingangsseite 20 kann beispielsweise mit einem Antriebsmotor, insbesondere einem Hubkolbenmotor, verbunden sein. Die Ausgangsseite 25 ist mit einer Getriebeeinrichtung verbindbar. In der Ausführungsform weist die Eingangsseite 20 eine Verzahnung 30 auf, die radial außenseitig angeordnet ist, um eine drehmomentschlüssige Verbindung mit dem Antriebsmotor (nicht dargestellt) bereitzustellen.

Die Kupplungseinrichtung 10 weist ferner einen ersten Lamellenträger 35 und einen zweiten Lamellenträger 40 auf. Der erste Lamellenträger 35 ist als Außenlamellenträger ausgebildet. Der zweite Lamellenträger 40 ist als Innenlamellenträger ausgebildet. Der erste Lamellenträger 35 ist drehmomentschlüssig über eine erste Verbindung 45 mit der Eingangsseite 20 verbunden. Der erste Lamellenträger 35 bildet mit dem zweiten Lamellenträger 40 einen Ringspalt aus. In dem weist die Kupplungseinrichtung 10 ein Reibpaket 50 auf. Das Reibpaket 50 weist in der Ausführungsform mehrere erste Reibpartner 55 und mehrere zweite Reibpartner 60 auf, die abwechselnd stapelartig in dem Reibpaket 50 angeordnet sind. Dabei ist der erste Reibpartner 55 drehmomentschlüssig mit dem ersten Lamellenträger 35 verbunden. Der zweite Reibpartner 60 ist drehmomentschlüssig mit dem zweiten Lamellenträger 40 verbunden.

Die Ausgangsseite 25 weist eine Ausgangswelle 65 und ein Ausgangselement 70 auf. Die Ausgangswelle 65 ist beispielhaft gestuft ausgebildet. Auf der Ausgangswelle 65 ist die Eingangsseite 30 drehbar gegenüber der Ausgangswelle 65 mittels einer Lagerung 71 gelagert. Axial angrenzend an die Eingangsseite 20 ist eine Abstützeinrichtung 75 vorgesehen. Die Abstützeinrichtung 75 ist dabei topfartig ausgebildet. Die Abstützeinrichtung 75 erstreckt sich radial innenseitig von der Ausgangswelle 65 hin zum Reibpaket 50. Ferner ist eine Nabe 80 vorgesehen. Die Nabe 80 ist drehmomentschlüssig mit der Ausgangswelle 65 verbunden. Zwischen der Nabe 80 und dem zweiten Lamellenträger 40 ist eine Verstärkungseinrichtung 85 vorgesehen. Die Verstärkungseinrichtung 85 ist drehmomentschlüssig über eine zweite Verbindung 90 mit dem zweiten Lamellenträger 40 verbunden. Über eine dritte Verbindung 95 ist die Verstärkungseinrichtung 85 drehmomentschlüssig mit der Nabe 80 verbunden.

In axialer Richtung ist die Nabe 80 zwischen dem Ausgangselement 70 und der Abstützeinrichtung 75 angeordnet. Axial zwischen der Abstützeinrichtung 75 und einem Absatz 100 der Ausgangswelle 65 ist fakultativ eine Scheibe 102 angeordnet. Die Scheibe 102 liegt dem Absatz 100 der Ausgangswelle 65 an. Die Abstützeinrichtung 75 liegt axial an der Scheibe 102 an. Das Ausgangselement 70 ist in der Ausführungsform als Sicherungsring ausgebildet, der in eine Nut 101 der Ausgangswelle 65 eingreift. Auf diese Weise kann gewährleistet werden, dass die axiale Position der Nabe 80 und der Abstützeinrichtung 75 gewährleistet ist.

Ferner weist die Kupplungseinrichtung 10 eine Anpresseinrichtung 105 auf. Die Anpresseinrichtung 105 ist auf einer zur Abstützeinrichtung 75 gegenüberliegenden Seite des Reibpaketes 50 angeordnet. Die Anpresseinrichtung 105 umfasst ein beispielhaft scheibenförmig ausgebildetes Anpresselement 107. Das Anpresselement 107 grenzt axial an das Reibpaket 50 radial außen an. Das Anpresselement 107 ist in der Ausführungsform mittels einer vierten Verbindung 110 drehmomentschlüssig mit dem zweiten Lamellenträger 40 verbunden. Ferner ist ein Abstützmittel 109 vorgesehen.

Die Anpresseinrichtung 105 ist mit einem Ausrücksystem 106 verbunden. Dabei ist beispielhaft das Ausrücksystem 106 mit dem Anpresselement 107 gekoppelt. Das Ausrücksystem 106 kann beispielsweise ein Seilzugsystem oder ein Hydrauliksystem aufweisen, um die Kupplungseinrichtung 10 auszurücken (öffnen) oder zu schließen.

Das Abstützmittel 109 umfasst bevorzugterweise einen ersten Sicherungsring 111 und eine erste Nut 112. Die erste Nut 112 ist radial innenseitig an einer inneren Umfangsfläche des zweiten Lamellenträgers 35 angeordnet. Der erste Sicherungsring 111 greift in die erste Nut 112 ein und blockiert eine axiale Verschiebbarkeit des Anpresselements 107 in eine vom Reibpaket 50 abgewandte Richtung. Alternativ kann das Abstützmittel 109 anstatt des ersten Sicherungsrings 111 und der ersten Nut 112 auch einen Stufenbolzen und/oder einen Seegerring umfassen. Dadurch kann die Kopplung des Anpresselements 106 sowohl mit dem hydraulischen als auch mechanisch ausgebildeten Ausrücksystem 106 ermöglicht werden.

Die Kupplungseinrichtung 10 ist in der Ausführungsform beispielhaft als gezogene Kupplungseinrichtung ausgebildet. Selbstverständlich ist auch denkbar, dass die Kupplungseinrichtung 10 als gedrückte Kupplungseinrichtung ausgebildet ist. Die Anpresseinrichtung 105 stellt eine Anpresskraft F bereit. Die Anpresskraft F drückt die Reibpartner 55, 60 aneinander. Korrespondierend zur Anpresskraft F stellt auf der gegenüberliegenden Seite des Reibpakets 50 die Abstützeinrichtung 75 eine Gegenkraft F_{G} bereit. Die Gegenkraft F_{G} wirkt in entgegengesetzter Richtung zu der Anpresskraft F, um einen Reibeingriff der Reibpartner 55, 60 zur drehmomentschlüssigen Verbindung des ersten Lamellenträgers 35 mit dem zweiten Lamellenträger 40 und somit der Eingangsseite 20 mit der Ausgangsseite 25 zu gewährleisten. Um den Reibschluss im Reibpaket 50 aufzuheben, wird mittels des Ausrücksystems 106 das Anpresselement 107 vom Reibpaket 50 weggezogen und die Anpresskraft F aufgehoben.

Ein zu übertragendes Drehmoment M wird im Zugbetrieb der Kupplungseinrichtung 10 über die Verzahnung 30 in die Eingangsseite 20 eingeleitet. Das Drehmoment M wird von der Eingangsseite 20 über die erste Verbindung 40 in den ersten Lamellenträger 35 und von diesem durch den Reibeingriff der Reibpartner 55, 60 des Reibpakets 50 an den zweiten Lamellenträger 40 übertragen. Vom zweiten Lamellenträger 40 wird das Drehmoment M über die zweite Verbindung 90 an die Verstärkungseinrichtung 85 weitergeleitet. Die Verstärkungseinrichtung 85 überträgt das Drehmoment M über die dritte Verbindung 95 an die Nabe 80. Die Nabe 80 leitet das Drehmoment M in die Ausgangswelle 65 ein.

Die Verstärkungseinrichtung 85 weist in der Ausführungsform wenigstens eine schraubenförmig ausgebildet Blattfeder 115 auf. Die Blattfeder 115 bewirkt bei Einleitung des Drehmoments M, eine als Verstärkungskraft F_{A} wirkende Axialkraft und eine Umfangskraft. Die Verstärkungskraft F_{A} bewirkt eine Verspannung der Blattfeder 115 in axialer Richtung zwischen der Nabe 80 und dem zweiten Lamellenträger 40. Über den zweiten Lamellenträger 40 und die vierte Verbindung 110 wird die Verstärkungskraft F_{A} in das Anpresselement 107 weitergeleitet. Die Abstützeinrichtung 75 passt die Gegenkraft F_{G} an die Summe der Anpresskraft F und die Verstärkungskraft F_{A}, so dass die Gegenkraft F_{G} und die Summe der Anpresskraft F und die Verstärkungskraft F_{A} gleich sind.

Die Verstärkungskraft F_{A} wirkt in gleiche Richtung wie die Anpresskraft F. In Summe bewirken die Verstärkungskraft F_{A} und die Anpresskraft F einen verstärkten Reibschluss im Reibpaket 50, so dass ein maximales über das Reibpaket 50 zu übertragendes Drehmoment M erhöht wird. Dabei wird unter dem maximal mit der Kupplungseinrichtung 10 übertragbaren Drehmoment ein Drehmoment verstanden, das mit der Kupplungseinrichtung 10 übertragbar ist, ohne dass die Kupplungseinrichtung 10 und/oder eine Komponente des Antriebsstrangs dauerhaft Schaden nimmt. Ist das in die Kupplungseinrichtung 10 eingeleitete Drehmoment größer dem maximal mit der Kupplungseinrichtung 10 übertragbaren Drehmoment, wird die Kupplungseinrichtung 10 und/oder Komponenten im Antriebsstrang überlastet.

Um die Überlastung zu vermeiden, weist die Kupplungseinrichtung 10 eine Begrenzungseinrichtung 125 auf.

Die Begrenzungseinrichtung 125 kann hierbei an allen Positionen eines Kraftflusses 130 durch die Kupplungseinrichtung 10, der in Figur 1 mittels einer dicken Linie gekennzeichnet ist, angeordnet werden. Die Begrenzungseinrichtung 125 dient dazu, die Anpresskraft F und/oder die Verstärkungskraft F_{A} zu begrenzen, um bei Übertragung des Drehmoments, das höher als das maximal mit der Kupplungseinrichtung 10 übertragbare Drehmoment M ist, einen Schlupf zwischen der Eingangsseite 20 und der Ausgangsseite 25 in der Kupplungseinrichtung 10 zu erzielen, sodass die Kupplungseinrichtung 10 selbst aber auch die Komponenten des Antriebsstrangs vor Beschädigung geschützt sind. Mittels des Schlupfs im Reibpaket 50 überträgt die Kupplungseinrichtung 10 ein Schlupfmoment zwischen der Eingangsseite 20 und der Ausgangsseite 25, das im Wesentlichen dem maximal mit der Kupplungseinrichtung 10 zu übertragenden Drehmoment entspricht. Dadurch kann beispielsweise ein Ausbrechen eines Zahns in einer Getriebeeinrichtung durch das Drehmoment M, das höher ist, als das maximal mit der Kupplungseinrichtung 10 zu übertragende Drehmoment M, vermieden werden. Auch wird eine vollständige Drehmomentunterbrechung zwischen der Eingangsseite 20 und der Ausgangsseite 25 vermieden.

Dies ist insbesondere dann von Relevanz, wenn die Kupplungseinrichtung 10 beispielsweise in einem Motorrad eingebaut ist. Das Motorrad fährt über ein Schlagloch oder springt, sodass bei Wiederaufsetzen eines Rads des Motorrads und somit wieder einer direkten Verbindung zwischen Fahrbahn und dem Antriebsmotor ein hohes, zu übertragendes Drehmoment M auf den Antriebsstrang wirkt.

Die in Figur 1 beschriebene Kupplungseinrichtung 10 verstärkt dabei mit dem zu übertragenden Drehmoment M die Anpresskraft F mit der Verstärkungskraft F_{A}, sodass dieses zu übertragende Drehmoment M mittels der Kupplungseinrichtung 10 übertragbar ist. Überschreitet das zu übertragende Drehmoment M das maximal mit der Kupplungseinrichtung 10 übertragbares Drehmoment, das in Abhängigkeit des Reibschlusses, einer Summe der Anpresskraft F und einem vordefinierten Wert der Verstärkungskraft F_{A} korreliert, so löst die Begrenzungseinrichtung 125 aus und erlaubt ein Durchrutschen des Reibpakets 50 der Kupplungseinrichtung 10, sodass ein weiterer Anstieg der Verstärkungskraft F_{A} durch die Begrenzungseinrichtung 125 vermieden wird und somit eine Drehmomentübertragung des Drehmoments, das größer als das maximal mit der Kupplungseinrichtung 10 zu übertragene Drehmoment M, vermieden wird.

Figur 2 zeigt einen schematischen Halblängsschnitt durch eine Kupplungseinrichtung 10 gemäß einer zweiten Ausführungsform. Die Kupplungseinrichtung 10 ist ähnlich zu der in Figur 1 gezeigten Kupplungseinrichtung als selbstverstärkende Kupplungseinrichtung 10 ausgebildet. Abweichend dazu sind die Nabe 80, der zweite Lamellenträger 40 und die Abstützeinrichtung 75 einteilig ausgeführt. Dabei stellt der zweite Lamellenträger 40 über die Abstützeinrichtung 75 die Gegenkraft F_{G} zu der Anpresskraft F und der Verstärkungskraft F_{A} bereit. Ferner ist an der Nabe 80 ein Anlageabschnitt vorgesehen.

Die Anpresseinrichtung 105 weist eine am Anpresselement 107 vorgesehene Aufnahme 201 auf. Die Verstärkungseinrichtung 85 umfasst ein Gewinde 205, das der Anpresseinrichtung 105 angeordnet ist, und die Anpresseinrichtung 105 mit der Ausgangswelle 65 gekoppelt. Das Gewinde 205 kann dabei schraubenförmig angeordnete Flanken aufweisen. Das Gewinde 205 bewirkt, dass bei einer relativen Verdrehung der Anpresseinrichtung 105 gegenüber der Ausgangswelle 65 die Anpresseinrichtung 105 in axialer Richtung relativ zu der Ausgangswelle 65 bewegt wird.

Die Anpresseinrichtung 105 umfasst ein vorgespanntes angeordnetes Federelement 200. Das Federelement 200 ist in einer Aufnahme 201 der Anpresseinrichtung 105 angeordnet. Die Aufnahme 201 ist als in Umfangsrichtung umlaufende Ringprägung in dem Anpresselement 107 vorgesehen. Das Federelement 200 stützt sich mit einem ersten Ende 210 an der Aufnahme 201 ab Ein zweites Ende 215 des Federelements 200 stützt sich an dem Anlageabschnitt 220 der Nabe 80 ab.

Die Anpresseinrichtung 105 ist mit dem Ausrücksystem 106 gekoppelt. In geschlossenem Zustand der Kupplungseinrichtung 10 stellt das Federelement 200 die Anpresskraft F bereit. Die Anpresskraft F bewirkt, wie bereits schon in Figur 1, einen Reibschluss im Reibpaket 50 zur (teilweisen) drehmomentschlüssigen Verbindung des ersten Lamellenträgers 35 mit dem zweiten Lamellenträger 40. Bei Einleitung des zu übertragenden Drehmoments M verdreht sich Ausgangsseite 25 gegenüber der Anpresseinrichtung 105. Das Gewinde 206 bewirkt eine Umsetzung zumindest eines teils des übertragenen Drehmoments M in eine in axialer Richtung wirkende Verstärkungskraft F_{A}. Das Reibpaket 50 wir mit der Verstärkungskraft F_{A} zusätzlich zur Anpresskraft F beaufschlagt. Die Verstärkungseinrichtung 85 erhöht die Verstärkungskraft F_{A} soweit, dass das zu übertragende Drehmoment M vollständig über das Reibpaket 50 übertragen wird und im Reibpaket 50 keine Verdrehung der Eingangsseite 20 gegenüber der Ausgangsseite 25 Schlupf ermöglicht wird.

Der Kraftfluss 130 der Verstärkungskraft F_{A} und der Anpresskraft F verläuft entlang der in Figur 2 mittels dicken Linie von dem Anlageabschnitt 220 hin zur Nabe 80 erfolgen. Entlang des Kraftflusses 130 kann die Begrenzungseinrichtung 125 angeordnet werden. Dabei bewirkt die Begrenzungseinrichtung 125 die gleiche Wirkung wie in Figur 1 erläutert, dass, bei beispielsweise einem schlagartigen Einleiten eines zu hohen für die Kupplungseinrichtung 10 und schädlichen zu übertragenden Drehmoments M, dieses nicht durch die Kupplungseinrichtung 10 übertragen wird, sondern die Drehmomentübertragung teilweise durch eine Begrenzung der Anpresskraft F und insbesondere der Verstärkungskraft F_{A} begrenzt wird, sodass Komponenten im Antriebsstrang durch den Schlupf in der Kupplungseinrichtung 10 vor Beschädigung geschützt sind.

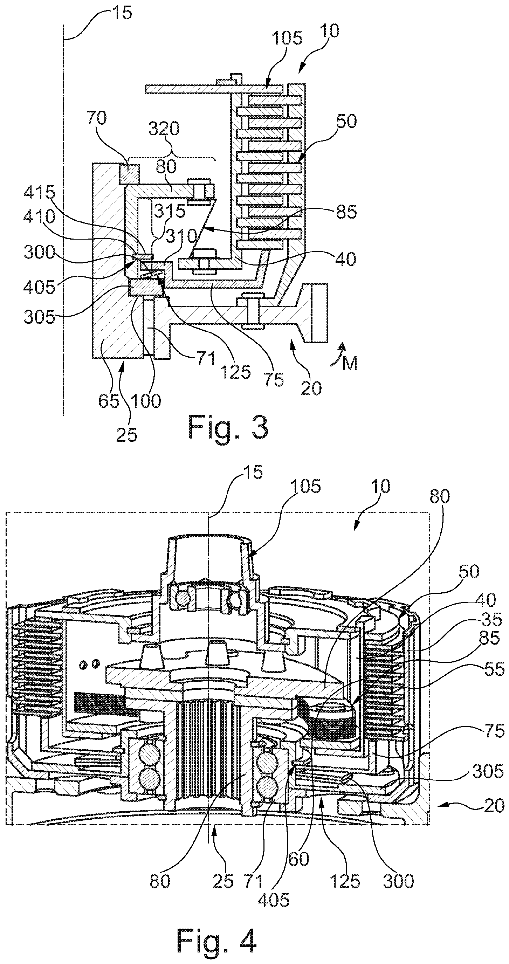

Figur 3 zeigt einen Halblängsschnitt durch eine Kupplungseinrichtung 10 gemäß einer dritten Ausführungsform. Die Kupplungseinrichtung 10 ist ähnlich zu der in Figur 1 gezeigten Kupplungseinrichtung 10 ausgebildet. Dabei ist die Begrenzungseinrichtung 125 zwischen der Ausgangsseite 20 und der Abstützeinrichtung 75 angeordnet.

Die Begrenzungseinrichtung 125 umfasst in der Ausführungsform ein Federmittel 300. Das Federmittel 300 ist beispielhaft als Tellerfeder ausgebildet. Selbstverständlich ist auch denkbar, dass das Federmittel 300 andersartig ausgebildet ist. So ist beispielsweise denkbar, dass das als Druckfeder oder als Zugfeder oder als Blattfeder ausgebildet ist.

Ferner umfasst die Ausgangsseite 25 eine Abstützscheibe 305, die auf einer zum Federmittel 300 abgewandten Seite an dem Absatz 100 der Ausgangswelle 65 anliegt. Zur axial kompakten Ausgestaltung weist die Abstützeinrichtung 75 radial innenseitig eine Topfung 310 auf, die das Federmittel 300 aufnimmt. Das Federmittel 300 ist somit radial innenseitig der Verstärkungseinrichtung 85 und des zweiten Lamellenträgers 40 angeordnet. Das Federmittel 300 ist radial außenseitig einem in axialer Richtung verlaufenden Axialabschnitt 315 der Nabe 80 angeordnet. Die Nabe 80 weist ferner einen Radialabschnitt 320 auf, der in axialer Richtung auf einer zum Federmittel 300 gegenüberliegenden Seite mit dem Axialabschnitt 315 verbunden ist. Radial außenseitig an dem Radialabschnitt 320 ist die Verstärkungseinrichtung 85 mit der Nabe 80 verbunden. In der Ausführungsform ist die Ausgangswelle 65 gestuft ausgebildet. Axial angrenzend an den Absatz 100, ist wie bereits erläutert, die Abstützscheibe 305 angeordnet. Angrenzend an die Abstützscheibe 305 ist der Axialabschnitt 315 der Nabe 80 angeordnet. An dem Axialabschnitt 315 grenzt das Ausgangselement 70 an. Mit jeder der genannten Komponenten wird in axialer Richtung die Ausgangswelle 65 schmaler. Dabei wird die Abstützscheibe 305 und die Nabe 80 durch das Ausgangselement 70 axial gesichert. Selbstverständlich ist auch denkbar, dass die Nabe 80 oder die Abstützscheibe 305 mittels einer Mutter auf der Ausgangswelle 65 gesichert werden.

Das als Tellerfeder ausgebildete Federmittel 300 ist vorgespannt angeordnet. Die Vorspannung weist dabei einen Wert auf, der im Wesentlichen einer Summe der Anpresskraft F und einem vordefinierten Wert der Verstärkungskraft F_{A} ist. Um die Vorspannkraft des Federmittels 300 in der Montage zu erhalten, ist ein Anschlagmittel 405 vorgesehen. Das Anschlagmittel 405 umfasst einen zweiten Sicherungsring 415 und eine in der Nabe 80 angeordnete zweite Nut 410. Die zweite Nut 410 verläuft dabei in Umfangsrichtung. In die zweite Nut 410 greift der zweite Sicherungsring 415 ein. Zwischen dem Federmittel 300 und dem Sicherungsring 415 ist die Abstützeinrichtung 75 angeordnet. Die Abstützeinrichtung 75 wird durch die vorgespannte Anordnung des Federmittels 300 zwischen der Abstützscheiben 305 und der Abstützeinrichtung 75 gegen den Sicherungsring 415 gepresst. Der Sicherungsring 415 blockiert durch das Anschlagen der Abstützeinrichtung 75 an dem Sicherungsring 415 eine Entspannung des Federmittels 300.

Ein Überpressen des Federmittels 300 wird in der Ausführungsform dadurch begrenzt, dass die Anpresseinrichtung 105 oder das Ausrücksystem 106 nicht dargestellte Mittel aufweist, die eine weitere axiale Verschiebung der Anpresseinrichtung 105 in Richtung der Eingangsseite 20 blockieren. Dies kann beispielsweise dadurch erreicht werden, wenn das Ausrücksystem 106 eine Seilzugbetätigung umfasst. Ist das Ausrücksystem 106 teilweise hydraulisch ausgebildet, so ist es sinnvoll, dass ein weiteres Anschlagsmittel vorgesehen ist, das eine weitere axiale Verschiebung der Anpresseinrichtung 105 über das Reibpaket 50 und der Abstützeinrichtung 75 verhindert.

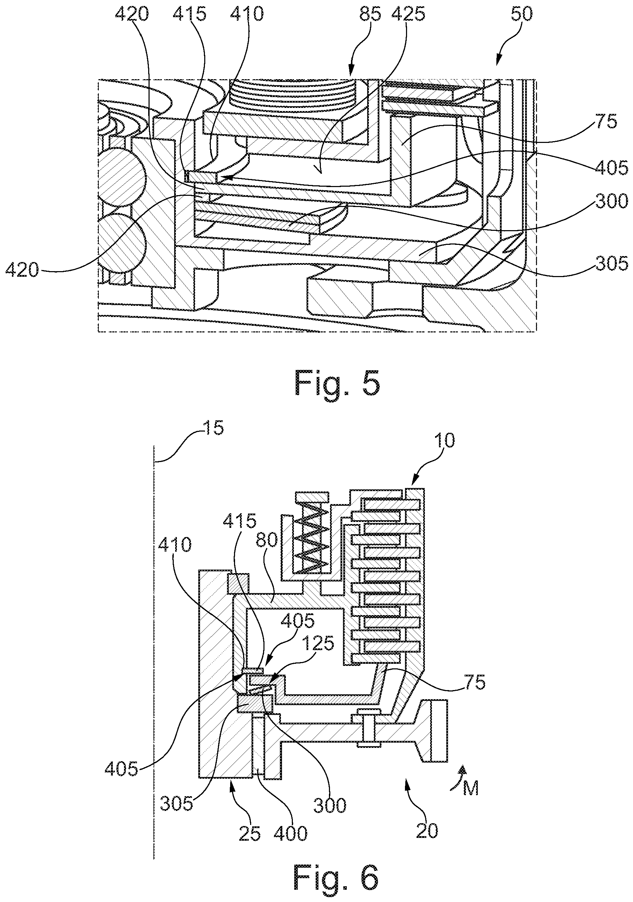

Figur 4 zeigt einen Längsschnitt durch eine Kupplungseinrichtung 10 gemäß einer vierten Ausführungsform. Figur 5 zeigt einen Ausschnitt der in Figur 4 gezeigten Kupplungseinrichtung10. Die Kupplungseinrichtung 10 ist im Wesentlichen eine konstruktive Ausgestaltung der in Figur 3 erläuterten Kupplungseinrichtung 10.

Abweichend dazu wurde auf die Topfung 310 radial innenseitig zur Aufnahme des Federmittels 300 an der Abstützeinrichtung 75 verzichtet. Stattdessen weist die Abstützscheibe 305 eine Topfung 430 auf, um radial innenseitig der Topfung 430 eine Lagerstelle bereitzustellen, mit der die Abstützscheibe auf der Lagerung 71 drehbar auf der Nabe 80 gelagert ist. Radial außenseitig ist an der Abstützscheibe 305 das Anschlagsmittel 405 angeordnet. Die zweite Nut 410 ist dabei radial außenseitig in Umfangsrichtung verlaufend an der Abstützscheibe 305 angeordnet.

Das Federmittel 300 ist auf einer zur Verstärkungseinrichtung 85 gegenüberliegenden Seite der Abstützeinrichtung 75 zwischen der Abstützeinrichtung 75 und der Abstützscheibe 305 angeordnet. Das Federmittel 300 drückt, wie in Figur 5 gezeigt, mit der Vorspannkraft von unten gegen ein dem Federmittel 300 und der Abstützeinrichtung 75 angeordneten Zwischenring 420. Der Zwischenring 420 liegt an der Abstützeinrichtung 75 auf einer zum Reibpaket 50 gegenüberliegenden Seite an. Das Federmittel 300 drückt die Abstützeinrichtung 75 in Figur 5 in Richtung dem Reibpaket 50, sodass eine der Verstärkungseinrichtung 85 zugewandte Seitenfläche 425 an dem Sicherungsring 415 anliegt und eine weitere Entspannung des Federmittels 300 verhindert wird.

Die Vorspannkraft des Federmittels 300 bewirkt, dass im Regulärbetrieb, also wenn das zu übertragende Drehmoment M kleiner als ein maximal mit der Kupplungseinrichtung 10 übertragbares Drehmoment ist, die Abstützeinrichtung 75 in ihrer Position gehalten wird. Wird ein überhöhtes Drehmoment, das größer ist als das Drehmoment das maximal mit der Kupplungseinrichtung 10 übertragbar ist, in die Kupplungseinrichtung 10 eingeleitet, so erzeugt die Verstärkungseinrichtung 85, wie oben erläutert, die Verstärkungskraft F_{A}, korrespondierend zum überhöhten Drehmoment. Ist die Summe der Anpresskraft F und der Verstärkungskraft F_{A} größer der Vorspannkraft des Federmittels 300, gibt das Federmittel 300 nach, sodass die Abstützeinrichtung 75 axial nach unten durch die Summe der ansteigende Verstärkungskraft F_{A} und der Anpresskraft F verschoben wird. Mit anderen Worten, bewirkt das Federmittel 300 bei Überschreiten der Vorspannkraft und somit einem elastischen Nachgeben des Federmittels 300 einen Einbruch der Gegenkraft F_{G} und somit eine Veränderung des Kräftegleichgewichts zwischen der Summe der Anpresskraft F und der Verstärkungskraft F_{A} und der Gegenkraft F_{G}, die in einer Verschiebung des Reibpakets 50, aber auch der Anpresseinrichtung 105 und der Abstützeinrichtung 75 resultiert.

Figur 6 zeigt einen Halblängsschnitt durch eine Kupplungseinrichtung 10 gemäß einer fünften Ausführungsform. Die Kupplungseinrichtung 10 ist im Wesentlichen wie in Figur 2 erläutert ausgebildet. Abweichend dazu ist die Begrenzungseinrichtung 125, wie in den Figuren 3 bis 5 erläutert, ausgebildet und das in den Figuren 3 bis 5 erläuterte Anschlagsmittel 405 vorgesehen.

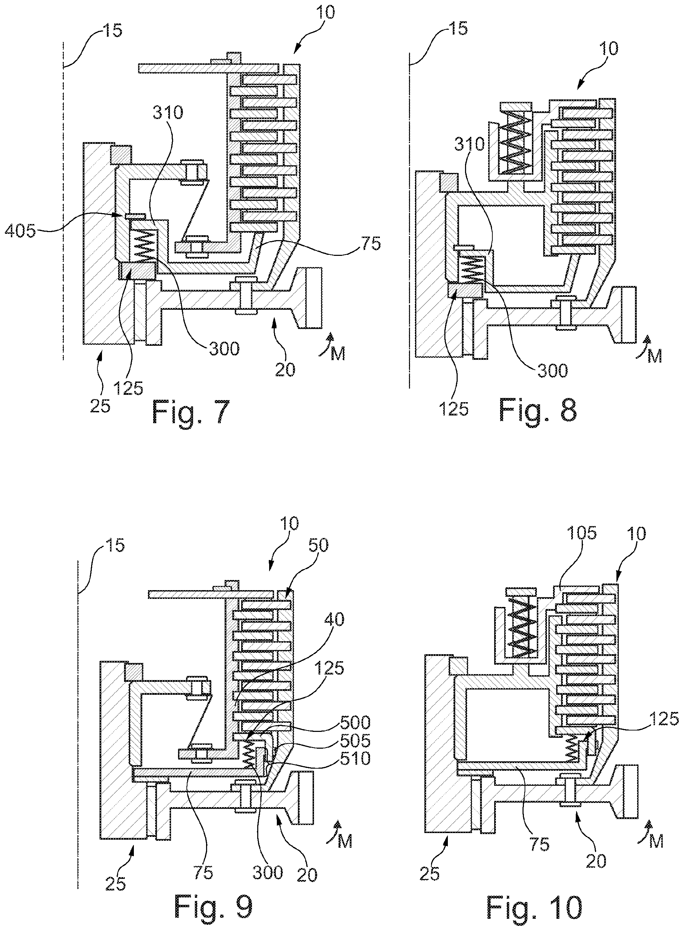

Figur 7 zeigt einen Halblängsschnitt durch eine Kupplungseinrichtung 10 gemäß einer sechsten Ausführungsform. Die Kupplungseinrichtung 10 ist im Wesentlichen identisch zu der in den Figuren 3 bis 5 erläuterten Kupplungseinrichtung 10 ausgebildet. Abweichend dazu ist das Federmittel 300 als Druckfeder ausgebildet. Ferner ist die Topfung 310 der Abstützeinrichtung 75 stärker als in Figur 3 erläutert in axialer Richtung beispielhaft ausgebildet, um axial Bauraum für das Federmittel 300 bereitzustellen. In Figur 7 ist in der Ausführungsform eine einzige Druckfeder gezeigt. Selbstverständlich ist auch denkbar, dass mehrere in Umfangsrichtung beabstandet zueinander angeordnete Druckfedern vorgesehen sind, um eine gleichmäßig in Umfangsrichtung verteilt wirkende Vorspannkraft des Federmittels 300 bereitzustellen.

Figur 8 zeigt einen Halblängsschnitt durch eine Kupplungseinrichtung 10 gemäß einer siebten Ausführungsform. Die Kupplungseinrichtung 10 ist dabei eine Kombination aus der in Figur 6 erläuterten Kupplungseinrichtung 10 und der in Figur 7 erläuterten Kupplungseinrichtung 10. Dabei ist der konstruktive Aufbau entsprechend der in Figur 6 gezeigten Kupplungseinrichtung, wobei die Topfung 310 der Abstützeinrichtung 75 und das Federmittel 300 wie in Figur 7 erläutert ausgebildet sind, der übrige Aufbau der Kupplungseinrichtung 10 entspricht der in Figur 6 erläuterten Kupplungseinrichtung 10.

Figur 9 zeigt einen Halblängsschnitt durch eine Kupplungseinrichtung 10 gemäß einer achten Ausführungsform. Die Kupplungseinrichtung 10 ist ähnlich zu der in Figur 7 ausgebildeten Kupplungseinrichtung 10 ausgebildet. Abweichend dazu ist das Federmittel 300 radial außenseitig gegenüber Figur 7 auf einer gegenüberliegenden Seite zu der Abstützeinrichtung 75 (bezogen auf Figur 7) angeordnet. Das Federmittel 300 ist nun auf einer zum Reibpaket 50 zugewandten Seite der Abstützeinrichtung 75 angeordnet. Zusätzlich ist ein Druckring 500 vorgesehen, der zwischen dem Reibpaket 50 und dem Federmittel 300 der Begrenzungseinrichtung 125 angeordnet ist. Der Druckring 500 ist mittels einer fünften Verbindung 505 axial verschiebbar, aber drehmomentschlüssig mit der Abstützeinrichtung 75 verbunden. Die Abstützeinrichtung 75 ist radial außenseitig topfförmig ausgebildet, sodass ausreichend Bauraum zwischen einem Axialabschnitt 510 der Abstützeinrichtung 75 und dem zweiten Lamellenträger 40 zur Anordnung des Federmittels 300 vorhanden ist. Ferner stellt die Verbindung 505 sicher, dass das Federmittel 300 zwischen der Abstützeinrichtung 75 und dem Druckring 500 vorgespannt montiert werden kann.

Die Funktionsweise der Kupplungseinrichtung 10 ist ähnlich zu der in den Figuren 1, 3 bis 5 und 7 erläuterten Kupplungseinrichtungen 10. Auch hierbei gibt die Begrenzungseinrichtung 125 nach Überschreiten der Vorspannkraft in axialer Richtung in Richtung der Eingangsseite 20 nach, sodass ein Schlupf im Reibpaket 50 auftritt und somit die Eingangsseite 20 nicht mehr voll drehmomentschlüssig mit der Ausgangsseite 25 verbunden ist. Dadurch kann nur noch das Schlupfmoment und nicht mehr das an der Eingangsseite 20 oder Ausgangsseite 25 anliegende Drehmoment M zwischen der Eingangsseite 20 und der Ausgangsseite 25 übertragen werden, sodass die Komponenten im Antriebsstrang vor dem überhöhten Drehmoment M geschützt sind.

Figur 10 zeigt einen Halblängsschnitt durch eine Kupplungseinrichtung 10 gemäß einer neunten Ausführungsform. Die Kupplungseinrichtung 10 ist eine Kombination aus der in Figur 8 gezeigten Kupplungseinrichtung 10 und der in Figur 9 gezeigten Kupplungseinrichtung 10. Dabei ist von Figur 8 im Wesentlichen der generelle Aufbau der Kupplungseinrichtung 10 übernommen, wobei der in Figur 9 gezeigte Aufbau der Begrenzungseinrichtung 125 und der Abstützeinrichtung 75 übernommen ist.

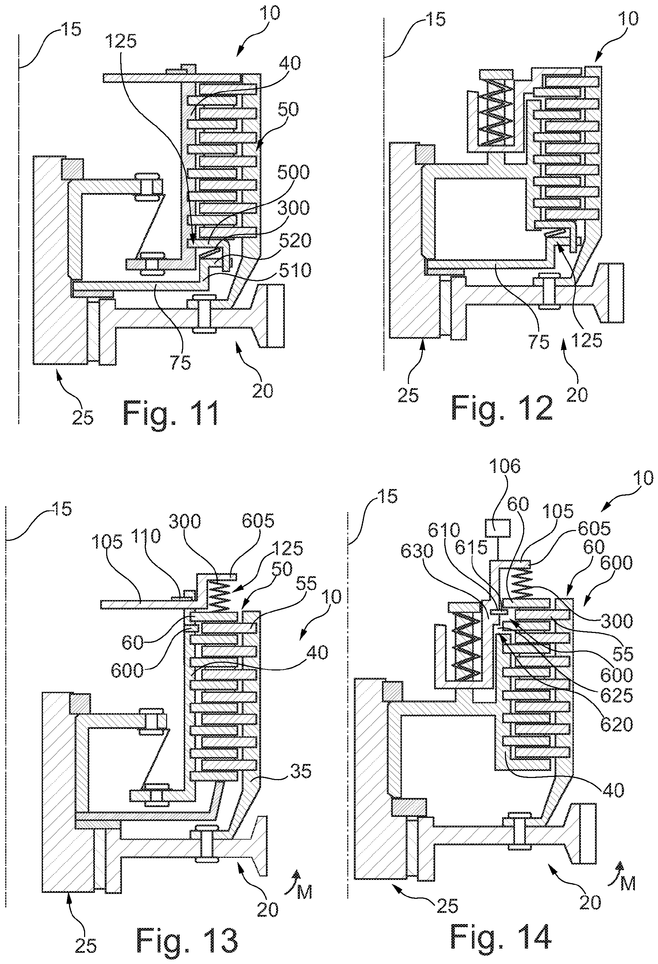

Figur 11 zeigt einen Halblängsschnitt durch eine Kupplungseinrichtung 10 gemäß einer zehnten Ausführungsform. Die Kupplungseinrichtung 10 ist ähnlich zu der in Figur 9 gezeigten Kupplungseinrichtung 10 ausgebildet. Abweichend dazu ist das Federmittel 300 gegenüber der in Figur 9 gezeigten Ausgestaltung als Druckfeder als Tellerfeder ausgebildet. Ferner ist der Axialabschnitt 510 der Abstützeinrichtung 75 radial innenseitig gegenüber der in Figur 9 gezeigten Ausgestaltung angeordnet, sodass der Axialabschnitt 510 parallel zum zweiten Lamellenträger 40 verläuft. Ferner ist zwischen der Abstützeinrichtung 75 und dem Reibpaket 50 der Druckring 500 vorgesehen, um ein direktes Reiben des Federmittels 300 an dem Reibpaket 50 zu vermeiden. Das Federmittel 300 liegt in der Ausführungsform radial innenseitig an einem in radialer Richtung verlaufenden Radialabschnitt 520 der Abstützeinrichtung 75 und radial außenseitig auf einer zum Reibpaket 50 abgewandten Seite des Druckrings 500 an.

Figur 12 zeigt einen Halblängsschnitt durch eine Kupplungseinrichtung 10 gemäß einer elften Ausführungsform. Die Kupplungseinrichtung 10 ist eine Kombination aus der in Figur 10 gezeigten Kupplungseinrichtung 10 und der in Figur 11 gezeigten Kupplungseinrichtung 10. Dabei entspricht der Aufbau im Wesentlichen der in Figur 10 gezeigten Kupplungseinrichtung 10, wobei jedoch die Begrenzungseinrichtung 125 und die Abstützeinrichtung 75 wie in Figur 11 erläutert ausgebildet sind.

Figur 13 zeigt einen Halblängsschnitt durch eine Kupplungseinrichtung 10 gemäß einer zwölften Ausführungsform. Die Kupplungseinrichtung 10 ist ähnlich zu der in den Figuren 1, 3 bis 5, 7, 9 und 11 gezeigten Kupplungseinrichtungen 10 ausgebildet. Abweichend dazu ist die Begrenzungseinrichtung 125 zwischen dem Reibpaket 50 und der Anpresseinrichtung 105 angeordnet. Das Federmittel 300 der Begrenzungseinrichtung 125 ist dabei in der Ausführungsform beispielhaft als Druckfeder 200 ausgebildet. Das Federmittel 300 liegt in der Ausführungsform direkt an dem zweiten Reibpartner 60 des Reibpakets 50 an. Es ist aber auch denkbar, dass ein Druckring 500 zur Abstützung des Federmittels 300 an dem Reibpaket 50 zusätzlich vorgesehen ist.

Um die Begrenzungseinrichtung 125 mit einem vorgespannten Federmittel 300 montieren zu können, ist zusätzlich ein Anschlagsmittel 600 vorgesehen. Das Anschlagsmittel 600 ist angrenzend an den zweiten Reibpartner 60 auf einer zum Federmittel 300 gegenüberliegenden Seite des zweiten Reibpartners 60 angeordnet. Das Anschlagsmittel 600 ist mit dem zweiten Lamellenträger 40 gekoppelt. Das Anschlagsmittel 600 begrenzt dabei die axiale Verschiebbarkeit des Reibpartners 60 gegenüber dem zweiten Lamellenträger 40. Die Montage und Demontage kann dadurch erfolgen, dass das Federmittel 300 vorgespannt an der Anpresseinrichtung 105 angebracht wird und der zweite Lamellenträger 40 mit der vierten Verbindung 110 mit der Anpresseinrichtung 105 gekoppelt wird. Durch die Kopplung des zweiten Lamellenträgers 40 mit der Anpresseinrichtung 105 wird der Kraftschluss des vorgespannten Federmittels 300 über den zweiten Reibpartner 60, dem Anschlagsmittel 600, dem zweiten Lamellenträger 40 sowie der vierten Verbindung 110 und der Anpresseinrichtung 105 geschlossen.

Figur 14 zeigt einen Halblängsschnitt durch eine Kupplungseinrichtung 10 gemäß einer dreizehnten Ausführungsform. Die Kupplungseinrichtung 10 ist im Wesentlichen eine Kombination aus der in Figur 13 gezeigten Kupplungseinrichtung 10 mit der in Figur 12 gezeigten Kupplungseinrichtung 10. Dabei weist die Anpresseinrichtung 105 eine zusätzliche Topfung 605 auf, die radial nach außen hin offen ist. Die Topfung 605 dient dazu, axialen Bauraum zur Aufnahme des Federmittels 300 zu schaffen.

Das Anschlagsmittel 600 weist in der Ausführungsform eine in der Anpresseinrichtung 105 angeordnete dritte Nut 610 und einen dritten Sicherungsring 615 auf. Der dritte Sicherungsring 615 greift in die dritte Nut 610 ein. Der dritte Sicherungsring 615 sowie die dritte Nut 610 sind im Wesentlichen axial auf Höhe des ersten Reibpartners 55, der als erstes von dem Reibpaket 50 angrenzend zu dem Federmittel 300 angeordnet ist, angeordnet. Dies bewirkt, dass zwischen dem Federmittel 300 und dem dritten Sicherungsring 615 der zweite Reibpartner 60 angeordnet ist.

Ferner ist ein weiteres Anschlagsmittel 620 vorgesehen. Das weitere Anschlagsmittel 620 weist einen am zweiten Lamellenträger 40 angeordneten ersten Absatz 625 und einen an der Anpresseinrichtung 105 angeordneten und dem ersten Absatz 625 zugewandten zweiten Absatz 630 auf. Die beiden Absätze 625, 630 sind radial auf gleicher Höhe angeordnet. Während das Anschlagsmittel 600 sicherstellt, dass das Federmittel 300 vorgespannt montiert werden kann, sichert das weitere Anschlagsmittel 620, dass das Federmittel 300 nach Überschreiten der Vorspannkraft nicht überdrückt und mechanisch beschädigt wird. Bei Überschreiten der Vorspannkraft bewegt sich die Anpresseinrichtung 105 in Richtung der Eingangsseite 20. Nach Überschreiten eines vordefinierten Federwegs des Federmittels 300 schlägt der zweite Absatz 630 an dem ersten Absatz 625 an, sodass eine weitere axiale Verschiebung der Anpresseinrichtung 105 gegenüber dem zweiten Lamellenträger 40 in Richtung der Eingangsseite 20 blockiert ist. Dadurch kann eine mechanische Beschädigung des Federmittels 300 vermieden werden. Dies ist besonders von Vorteil, wenn das Ausrücksystem 106 eine hydraulische Betätigung aufweist.

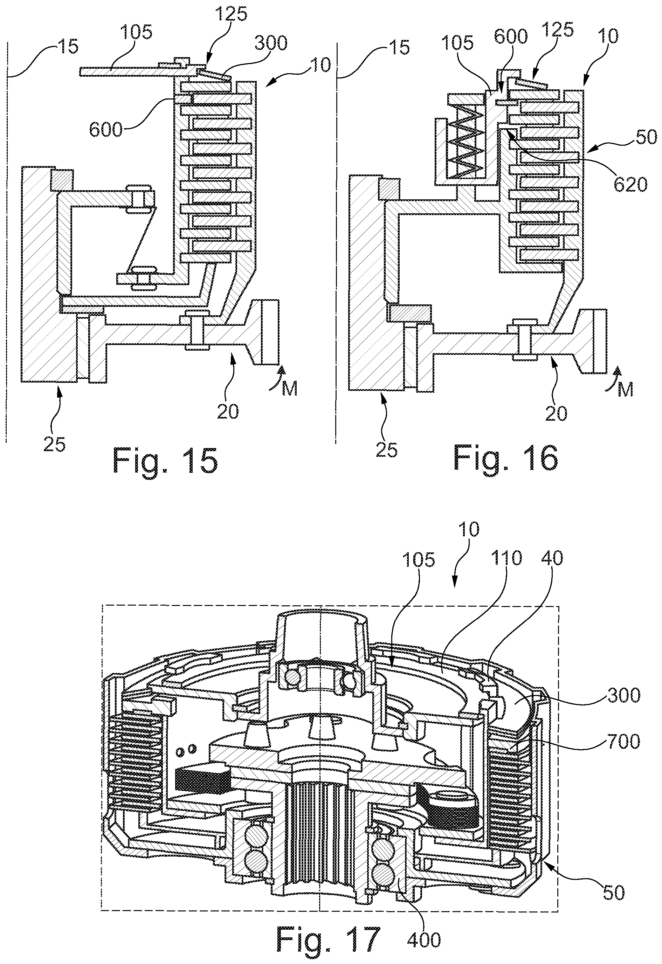

Figur 15 zeigt einen Halblängsschnitt durch eine Kupplungseinrichtung 10 gemäß einer 14. Ausführungsform. Die Kupplungseinrichtung 10 ist ähnlich zu der in Figur 13 gezeigten Kupplungseinrichtung 10 ausgebildet. Abweichend dazu ist das Federmittel 300 als Tellerfeder ausgebildet. Auf diese Weise kann auch der axial benötigte Bauraum für die Anpresseinrichtung 105, insbesondere durch Verzicht auf die Topfung 605 der Anpresseinrichtung 105 (vgl. Figuren 13 und 14), reduziert werden. Dadurch ist die Kupplungseinrichtung 10 insgesamt besonders kompakt ausgebildet.

Figur 16 zeigt einen Halblängsschnitt durch eine Kupplungseinrichtung 10 gemäß einer 15. Ausführungsform. Die Kupplungseinrichtung 10 ist im Wesentlichen eine Kombination aus der in Figuren 14 und 15 gezeigten Kupplungseinrichtungen 10. Dabei ist im Wesentlichen der Aufbau der Kupplungseinrichtung 10 entsprechend der in Figur 14 gezeigten Kupplungseinrichtung, wobei jedoch die Anpresseinrichtung 105 und die Begrenzungseinrichtung 125 im Wesentlichen wie in Figur 15 erläutert ausgebildet sind.

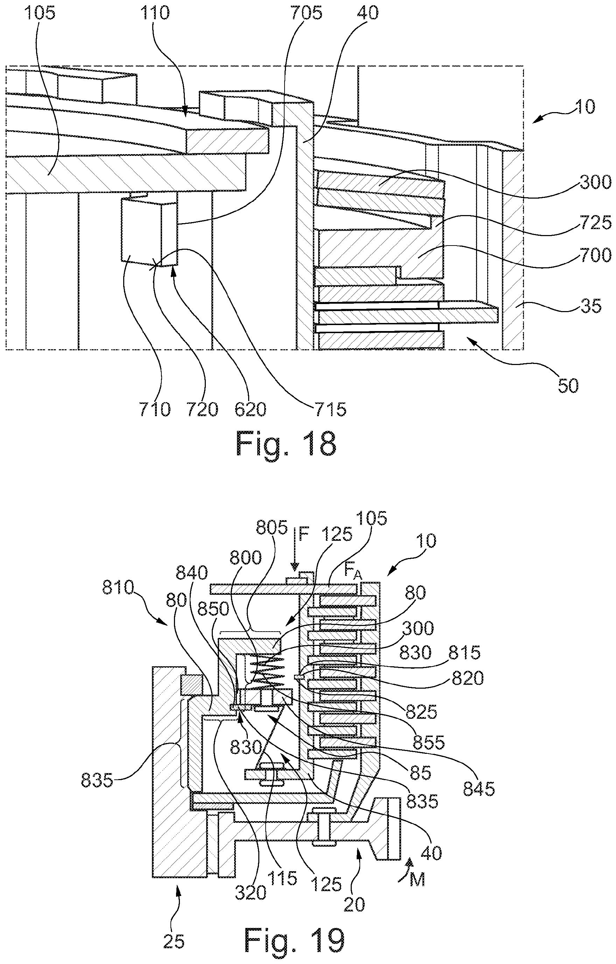

Figur 17 zeigt eine Schnittansicht durch eine Kupplungseinrichtung 10 gemäß einer 16. Ausführungsform. Figur 18 zeigt einen Ausschnitt der in Figur 17 gezeigten Kupplungseinrichtung 10. Die Kupplungseinrichtung 10 ist im Wesentlichen eine konstruktive Ausgestaltung der in Figur 15 gezeigten Kupplungseinrichtung 10. Abweichend dazu ist zusätzlich ein Druckring 700 zwischen dem Reibpaket 50 und dem Federmittel 300 angeordnet. Ferner weist das weitere Anschlagsmittel 620 in dem zweiten Lamellenträger 40 eine Nut 705 auf, die sich im Wesentlichen in axialer Richtung erstreckt. Das weitere Anschlagsmittel 600 weist an dem Druckring 700 einen Zapfen 710 auf. Der Zapfen 710 erstreckt sich von dem ringförmig ausgebildeten Druckring 700 radial nach innen hin. Der Zapfen 710 ist dabei in Umfangsrichtung im Wesentlichen korrespondierend zu der Nut 705 ausgebildet und greift in die Nut 705 ein. Die Nut 705 weist einen Nutgrund 715 auf. Der Zapfen 710 weist eine in einer Drehebene angeordnete Seitenfläche 720 auf. Die axiale Bewegung des Druckrings 700 wird durch das Anschlagen der Seitenfläche 720 des Zapfens 710 an dem Nutgrund 715 verhindert. Dadurch wird gewährleistet, dass das Federmittel 300 vorgespannt montiert werden kann. In der Ausführungsform sitzt das Federmittel 300 radial außenseitig an einem Absatz 725 des Druckrings 700 auf. Radial innenseitig liegt das Federmittel 300 an der Anpresseinrichtung 105 an. Selbstverständlich ist auch denkbar, dass das Federmittel 300 andersartig mit dem Druckring 700 und der Anpresseinrichtung 105 gekoppelt ist.

Figur 19 zeigt eine schematische Darstellung eines einen Halblängsschnitt durch eine Kupplungseinrichtung 10 gemäß einer 17. Ausführungsform. Die Kupplungseinrichtung 10 ist ähnlich zu der in den Figuren 1, 3 bis 5, 7, 9, 11, 13, 15, 17 und 18 gezeigten Kupplungseinrichtung 10 ausgebildet. Abweichend dazu ist Nabe 80 und die Begrenzungseinrichtung 125 andersartig als in den vorherigen Figuren ausgebildet.

Die Nabe 80 weist zusätzlich einen weiteren sich in axialer Richtung erstreckenden Axialabschnitt 800 und einen weiteren sich in radialer Richtung erstreckenden Radialabschnitt 805 auf. Der weitere Axialabschnitt 800 grenzt an den bereits in Figur 3 erläuterten Radialabschnitt 320 an und ist mit diesem verbunden. Der weitere Axialabschnitt 800 ist dabei radial außenseitig zum bereits in Figur 3 erläuterten Axialabschnitt 315 angeordnet. In axialer Richtung ist ebenso der weitere Axialabschnitt 800 axial versetzt zu dem axialen Abschnitt 315 angeordnet. Dabei erstreckt sich der weitere Axialabschnitt 805 von dem Radialabschnitt 320 hin zur Anpresseinrichtung 105. Radial nach außen erstreckt sich vom weiteren Axialabschnitt 800 der weitere Radialabschnitt 805. Diese Ausgestaltung sorgt dafür, dass die Nabe 80 radial außenseitig zu dem Radialabschnitt 320 eine Topfung 810 ausbildet. Zwischen dem weiteren Axialabschnitt 800 und dem zweiten Lamellenträger 40 ist die Begrenzungseinrichtung 125 vorgesehen.

Ferner ist ein erstes Anschlagsmittel 815 vorgesehen. Das erste Anschlagsmittel 815 umfasst in der Ausführungsform beispielhaft eine in dem zweiten Lamellenträger 40 radial innenseitig angeordnete erste Nut 820 und einen ersten Sicherungsring 825, der in die erste Nut 820 eingreift. Die erste Nut 820 verläuft in einer Drehebene. Radial außenseitig an dem weiteren Axialabschnitt 800 ist ein zweites Anschlagsmittel 830 vorgesehen. Das zweite Anschlagsmittel 830 ist in axialer Richtung versetzt zu dem ersten Anschlagsmittel 820 angeordnet. Das zweite Anschlagsmittel 830 umfasst eine in dem weiteren Axialabschnitt 800 angeordnete zweite Nut 835 und einen zweiten Sicherungsring 840. Der zweite Sicherungsring 840 greift radial außenseitig zu dem weiteren Axialabschnitt 800 in die zweite Nut 835 ein.

Die Verstärkungseinrichtung 85 umfasst eine Anpressscheibe 845, die über eine formschlüssige Verbindung 850 mit der Nabe 80, in der Ausführungsform beispielhaft mit dem weiteren Axialabschnitt 800, drehmomentschlüssig, jedoch axial verschiebbar verbunden ist. Die Anpressscheibe 845 ist über die zweite Verbindung 90 mit der Blattfeder 115 verbunden. Die Anpressscheibe 845 ist axial zwischen dem ersten Anschlagsmittel 815 und dem zweiten Anschlagsmittel 830 und radial zwischen der Nabe 80 und dem zweiten Innenlamellenträger 40 angeordnet.

Die Begrenzungseinrichtung 125 ist axial zwischen der Anpressscheibe 845 und dem weiteren Radialabschnitt 805 angeordnet. In radialer Richtung ist die Begrenzungseinrichtung 125 zwischen dem weiteren Axialabschnitt 800 und dem zweiten Lamellenträger 40 angeordnet.

Die Begrenzungseinrichtung 125 umfasst, wie bereits in den Figuren 3 bis 18 erläutert, das Federmittel 300, das in der Ausführungsform als Druckfeder 200 beispielhaft ausgebildet ist. Zur Fixierung der Position des Federmittels 300 ist ferner ein Bolzen 855 vorgesehen, der mit der Anpressscheibe 845 verbunden ist. Auf einer zur Anpressscheibe 845 abgewandten Seite des Bolzens 855 ist der Bolzen 855 beabstandet zu dem weiteren Radialabschnitt 805 angeordnet.

Wird das Drehmoment über die Eingangsseite 20 in die Kupplungseinrichtung 10 eingeleitet, so führt das Drehmoment in Verbindung mit der Anpresskraft F durch die Verstärkungseinrichtung 85 zu der Verstärkungskraft F_{A}. Das Federmittel 300 ist wie in den Figuren 3 bis 18 erläutert vorgespannt, sodass die axiale Position der Anpressscheibe 845 fixiert ist, wobei hierbei die Anpressscheibe 845 durch das Anschlagen an dem zweiten Anschlagsmittel 830 festgelegt wird. Wird ein Drehmoment M bereitgestellt, das größer als das maximal zu übertragende Drehmoment in dem Antriebsstrang ist, wird gleichzeitig die Verstärkungskraft F_{A} so weit erhöht, dass in Verbindung mit der Anpresskraft F das Federmittel 300 nachgibt und die Anpressscheibe 845 axial in Richtung dem weiteren Radialabschnitt 805 verschoben wird. Gleichzeitig bewegt sich der zweite Lamellenträger 40 in Richtung der Eingangsseite 20 nach unten hin in Figur 17. Dabei wird eine relative Verschiebbarkeit des zweiten Lamellenträgers 40 gegenüber der Nabe 80 dadurch begrenzt, dass der zweite Lamellenträger 40 mit dem ersten Anschlagsmittel 815 an der Anpressscheibe 845 anschlägt. Dadurch wird gewährleistet, dass das Federmittel 300 nicht überdrückt wird.

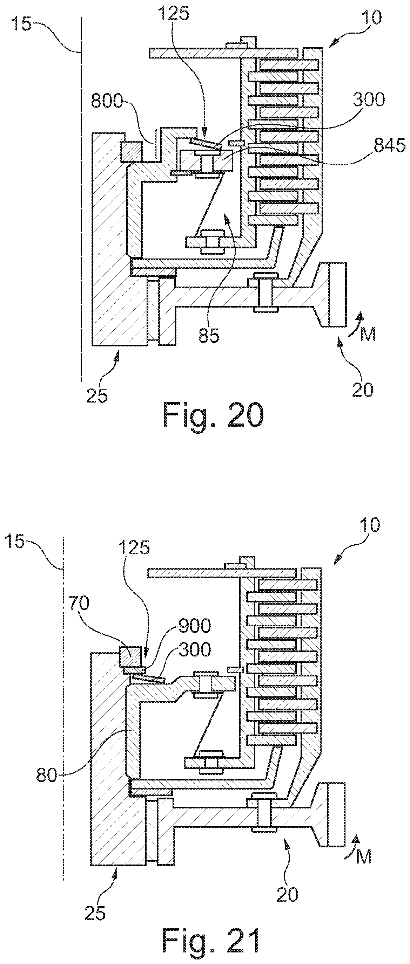

Figur 20 zeigt eine schematische Darstellung eines Halblängsschnitts durch eine Kupplungseinrichtung 10 gemäß einer 18. Ausführungsform. Die Kupplungseinrichtung 10 ist im Wesentlichen ähnlich zu der in Figur 19 gezeigten Ausgestaltung der Kupplungseinrichtung 10 ausgebildet. Abweichend dazu ist das Federmittel 300 als Tellerfeder ausgebildet. Diese Ausgestaltung hat den Vorteil, dass auf den in Figur 17 gezeigten Bolzen 855 verzichtet werden kann. Auch kann dadurch der weitere Axialabschnitt 800 gegenüber Figur 17 kürzer ausgebildet werden. Dadurch kann die Kupplungseinrichtung 10 insgesamt leichter ausgebildet werden.

Figur 21 zeigt einen Halblängsschnitt durch eine Kupplungseinrichtung 10 gemäß einer 19. Ausführungsform. Die Kupplungseinrichtung 10 ist ähnlich zu der in den Figuren 19 und 20 gezeigten Kupplungseinrichtung 10 ausgebildet. Abweichend dazu ist die Begrenzungseinrichtung 125 radial nach innen versetzt angeordnet. Das Federmittel 300 der Begrenzungseinrichtung 125 ist hierbei als Tellerfeder ausgebildet und axial zwischen dem Ausgangselement 70 und der Nabe 80 angeordnet. Diese Ausgestaltung hat den Vorteil, dass das Federmittel 300 besonders einfach montierbar ist.

In der Ausführungsform ist zusätzlich axial zwischen dem Ausgangselement 70 und dem Federmittel 300 eine Abstützscheibe 900 vorgesehen. Selbstverständlich ist auch denkbar, dass auf die Abstützscheibe 300 verzichtet werden kann.

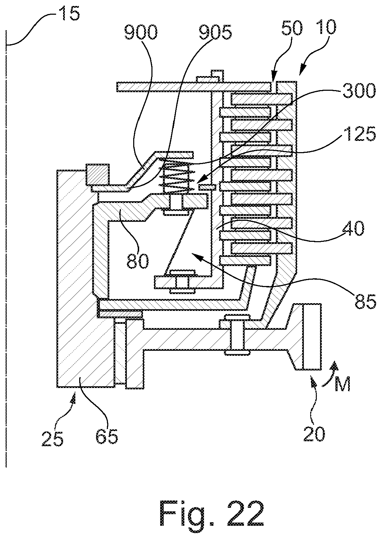

Figur 22 zeigt einen Halblängsschnitt durch eine Kupplungseinrichtung 10 gemäß einer 20. Ausführungsform. Die Kupplungseinrichtung 10 ist im Wesentlichen eine Kombination aus der in Figur 21 erläuterten Ausgestaltung der Kupplungseinrichtung 10 und der in Figur 20 erläuterten Ausgestaltung der Kupplungseinrichtung 10. Das Federmittel 300 der Begrenzungseinrichtung 125 ist zwischen der Abstützscheibe 305 und der Nabe 80 in axialer Richtung angeordnet. Auf die Anpressscheibe 845, wie in Figur 20 gezeigt, wird verzichtet. Hierbei ist die Nabe 80, wie bereits in den Figuren 1, 3, 5, 7, 9, 11, 13, 15 erläutert ausgebildet. Die Verstärkungseinrichtung 85 koppelt mit der Blattfeder 115 den zweiten Lamellenträger 40 und der Nabe 80. Die Abstützscheibe 305 weist hierbei eine weitere Topfung 905 auf, um die axiale Länge der Ausgangswelle 65 kurz zu halten. Die Abstützscheibe 305 ist in der Ausführungsform hierbei axial beabstandet zu der Nabe 80 angeordnet.

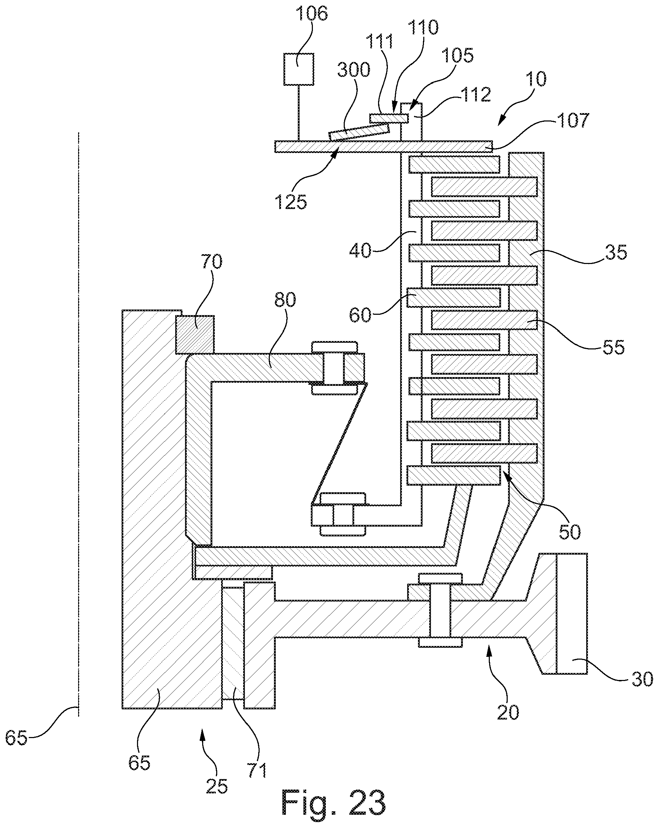

Figur 23 zeigt einen Halblängsschnitt durch eine Kupplungseinrichtung 10 gemäß einer 21. Ausführungsform. Die Kupplungseinrichtung 10 ist ähnlich zu der in Figur 3 erläuterten Ausgestaltung der Kupplungseinrichtung 10 ausgebildet. Abweichend dazu ist die Begrenzungseinrichtung 125 axial zwischen dem ersten Sicherungsring 111 und dem Anpresselement 107 angeordnet, so dass die Vorspannkraft des Federelements 300 durch das Koppelmittel 109 in der Montage am zweiten Lamellenträger 40 abgestützt wird.

Diese Ausgestaltung hat den Vorteil, dass eine axiale Position des Anpresselements 107 auch bei Überschreiten des maximal mit der Kupplungseinrichtung 10 übertragbaren Drehmoments M konstant gehalten werden kann.

Die oben beschriebenen Ausgestaltungen haben den Vorteil, dass bei selbstverstärkenden Kupplungen wie sie in den Figuren gezeigt sind, höhere Belastungen im Antriebsstrang zum einen realisierbar, zum anderen Überlastungen, beispielsweise beim zum schnellen Einkoppeln oder bei Sprüngen des Fahrzeugs des Antriebsstrangs (insbesondere in einem Getriebe, Kardan, Kette und/oder Riemen) vermieden werden können. Insbesondere werden hier dynamische Beanspruchungen kurzzeitig vermieden. Dies hat den Vorteil, dass selbstverstärkende Kupplungseinrichtungen 10 ohne diesen störenden Nebeneffekt in verschiedensten dynamischen Beanspruchungen eingesetzt werden können. Dadurch kann die Dynamikempfindlichkeit der selbstverstärkenden Kupplungseinrichtungen 10 reduziert und somit verbessert werden.

Auch wird durch die oben beschriebenen Ausgestaltungen gewährleistet, dass unter Berücksichtigung von Einbautoleranzen und Verschleiß die Anpresskraft F in Verbindung mit der Verstärkungskraft F_{A} auf einem nahezu konstanten Niveau begrenzt wird. Durch die oben beschriebene Vorspannung des Federmittels 300 wird gewährleistet, dass bei Momentenschlägen bzw. Sprüngen die Begrenzungseinrichtung nicht betätigt wird. Ist, wie oben beschrieben, das Federmittel 300 vorgespannt, so wird gewährleistet, dass die Begrenzungseinrichtung 125 bei Momentenanschlägen nicht betätigt wird. Auch ist von Vorteil, wenn eine Steifigkeit des Federmittels 300 im Betriebspunkt möglichst gering ist, um so die Anpresskraftbegrenzung für die Summe der Anpresskraft F und der Verstärkungskraft F_{A} bei einem konstanten Wert auslöst.

Die Wegbegrenzung des Federmittels 300 wird in der Ausführungsform teilweise durch die oben beschriebenen Anschlagsmittel 405, 600, 620, 815, 830 übernommen.

Selbstverständlich ist auch denkbar, dass auf die Anschlagsmittel 405, 600, 620, 815, 830 zumindest teilweise verzichtet wird und diese durch das Ausrücksystem 106, insbesondere durch ein Seilzugausrücksystem, übernommen werden. Selbstverständlich ist auch denkbar, dass die Anschlagsmittel 405, 600, 620, 815, 830 anders ausgebildet sind. So ist durchaus denkbar, dass wenigstens eines der Anschlagsmittel 405, 600, 620, 815, 830 einen Stufenbolzen, eine Abstandshülse oder eine Abstandsscheibe umfasst.

Ferner wird darauf hingewiesen, dass die Anzahl der Federmittel 300, die in den Figuren gezeigt sind, beispielhaft ist. Selbstverständlich ist auch denkbar, dass die Anzahl der Federmittel anders ist. Insbesondere ist hierbei denkbar, dass die Federmittel, beispielsweise die Tellerfeder, gestapelt sind, um die Vorspannkraft auf einen vordefinierten Wert festzulegen.

Des Weiteren wird darauf hingewiesen, dass selbstverständlich die Merkmale der in den Figuren 1 bis 23 beschriebenen Ausführungsformen miteinander auch anders als beschrieben kombiniert werden können.

### Bezugszeichenliste

- 10: Kupplungseinrichtung
- 15: Drehachse
- 20: Eingangsseite
- 25: Ausgangsseite
- 30: Verzahnung
- 35: erster Lamellenträger
- 40: zweiter Lamellenträger
- 45: erste Verbindung
- 50: Reibpaket
- 55: erster Reibpartner
- 60: zweiter Reibpartner
- 65: Ausgangswelle
- 70: Ausgangselement
- 71: Lagerung
- 75: Abstützeinrichtung
- 80: Nabe
- 85: Verstärkungseinrichtung
- 90: zweite Verbindung
- 95: dritte Verbindung
- 100: Absatz
- 101: Nut
- 102: Scheibe
- 105: Anpresseinrichtung
- 106: Ausrücksystem
- 109: Koppelmittel
- 110: vierte Verbindung
- 111: erster Sicherungsring
- 112: erste Nut
- 115: Blattfeder
- 125: Begrenzungseinrichtung
- 130: Kraftfluss
- 200: Druckfeder
- 201: Aufnahme
- 205: Gewinde
- 210: erstes Ende
- 215: zweites Ende
- 220: Anlageabschnitt

- 300: Federmittel
- 305: Abstützscheibe
- 310: Topfung
- 315: Axialabschnitt
- 320: Radialabschnitt

- 405: Anschlagsmittel
- 410: zweiter Nut
- 415: zweiter Sicherungsring
- 420: Zwischenring
- 425: Seitenfläche
- 430: Topfung
- 500: Druckring
- 505: fünfte Verbindung
- 510: Abschnitt

- 600: Anschlagsmittel
- 605: Topfung
- 610: Nut
- 615: Sicherungsring
- 620: weiteres Anschlagsmittel
- 625: erster Absatz
- 630: zweiter Absatz
- 700: Druckring
- 705: Nut
- 710: Zapfen
- 715: Nutgrund
- 720: Seitenfläche
- 725: Absatz des Druckrings

- 800: weiterer Axialabschnitt
- 805: weiterer Radialabschnitt
- 810: Topfung
- 815: erstes Anschlagsmittel
- 820: erste Nut
- 825: erster Sicherungsring
- 830: zweites Anschlagsmittel
- 835: zweite Nut
- 840: zweites Sicherungsmittel
- 845: Anpressscheibe
- 850: formschlüssige Verbindung
- 855: Bolzen

- 900: Abstützscheibe
- 905: weitere Topfung

## Patentansprüche

1. Kupplungseinrichtung (10), die drehbar um eine Drehachse (15) lagerbar ist, aufweisend:
- eine Eingangsseite (20), eine Ausgangsseite (25), wenigstens ein Reibpaket (50) mit wenigstens einem ersten Reibpartner (55) und wenigstens einen zweiten Reibpartner (60), sowie eine Verstärkungseinrichtung (85),
- wobei der erster Reibpartner (55) drehmomentschlüssig mit der Eingangsseite (20) verbunden ist,
- wobei der zweite Reibpartner (60) drehmomentschlüssig der Ausgangsseite (25) verbunden ist,
- wobei der erste und der zweite Reibpartner (55, 60) durch eine Anpresskraft (F) in Reibeingriff bringbar sind, um ein Drehmoment (M) zwischen der Eingangsseite (20) und der Ausgangsseite (25) zu übertragen,
- wobei die Ausgangsseite (25) eine Ausgangswelle (65) und ein Ausgangselement (70) aufweist,
- wobei das Ausgangselement (70) mit der Ausgangswelle (65) zumindest in eine axiale Richtung gekoppelt ist,
- wobei eine Nabe (80) vorgesehen ist, die drehmomentschlüssig mit der Ausgangswelle (65) verbunden und axial verschiebbar gegenüber der Ausgangswelle (65) ist, und
- wobei die Verstärkungseinrichtung (85) ausgebildet ist, die Anpresskraft (F) mit einer Verstärkungskraft (F_{A}) zu beaufschlagen,
- **dadurch gekennzeichnet, dass**
- eine Begrenzungseinrichtung (125) zwischen der Nabe (80) und einer Abstützeinrichtung (75) angeordnet ist,
- wobei die Begrenzungseinrichtung (125) ausgebildet ist, die Anpresskraft (F) und/oder die Verstärkungskraft (F_{A}) zumindest teilweise zu begrenzen, und wenigstens ein Federmittel (300) umfasst,
- wobei das Federmittel (300) als Druckfeder oder als Tellerfeder oder als Zugfeder oder als Blattfeder ausgebildet ist, und mit einer Vorspannkraft vorgespannt ist, die einen Wert aufweist, der einer Summe der Anpresskraft (F) und einem vordefiniertem Wert der Verstärkungskraft (F_{A}) entspricht.

2. Kupplungseinrichtung (10) nach Anspruch 1,
- wobei eine Abstützeinrichtung (75) vorgesehen ist,
- wobei die Abstützeinrichtung (75) mit der der Ausgangsseite (25) gekoppelt und ausgebildet ist, eine Gegenkraft (F_{G}) zur Anpresskraft (F) bereitzustellen, um den Reibeingriff zwischen dem ersten und zweiten Reibpartner (55, 60) zu bewirken,
- wobei die Begrenzungseinrichtung (125) zwischen der Abstützeinrichtung (75) und dem Reibpaket (50) und/oder
- wobei die Begrenzungseinrichtung (125) zwischen der Ausgangsseite (25) und der Abstützeinrichtung (75) angeordnet ist.

3. Kupplungseinrichtung (10) nach Anspruch 1 oder 2,
- wobei eine Anpresseinrichtung (105) vorgesehen ist,
- wobei die Anpresseinrichtung (105) ausgebildet ist, die Anpresskraft (F) bereitzustellen,
- wobei die Begrenzungseinrichtung (125) zwischen dem Reibpaket (50) und der Anpresseinrichtung (105) angeordnet ist.

4. Kupplungseinrichtung (10) nach einem der Ansprüche 1 bis 3, wobei die Begrenzungseinrichtung (125) zwischen der Verstärkungseinrichtung (85) und der Ausgangsseite (25) angeordnet ist.

5. Kupplungseinrichtung (10) nach einem der Ansprüche 1 bis 4,
- wobei ein Lamellenträger (40) vorgesehen ist,
- wobei der Lamellenträger (40) drehmomentschlüssig mit dem zweiten Reibpartner (60) und der Ausgangsseite (25) gekoppelt ist,
- wobei ein Anschlagsmittel (600) vorgesehen ist,
- wobei das Anschlagsmittel (600) angrenzend an den zweiten Reibpartner (60) auf einer zum Federmittel (300) gegenüberliegenden Seite des zweiten Reibpartners (60) angeordnet ist und mit dem Lamellenträger (40) gekoppelt,
- wobei der zweite Reibpartner (60) axial verschiebbar gegenüber dem Lamellenträger (40) ist,
- wobei das Anschlagsmittel (600) ausgebildet ist, die axiale Verschiebbarkeit des zweiten Reibpartners (60) gegenüber dem Lamellenträger (40) durch ein Anschlagen des zweiten Reibpartners (60) am Anschlagsmittel (600) zu begrenzen.

6. Kupplungseinrichtung (10) nach einem der Ansprüche 1 bis 5,
- wobei ein Lamellenträger (40) vorgesehen ist,
- wobei der Lamellenträger (40) drehmomentschlüssig mit dem zweiten Reibpartner (60) und der Ausgangsseite (25) gekoppelt ist,
- wobei eine Anpresseinrichtung (105) und ein Koppelmittel (109) vorgesehen ist,
- wobei die Anpresseinrichtung (105) axial angrenzend an das Reibpaket (50) angeordnet und ausgebildet ist, die Anpresskraft (F) bereitzustellen,
- wobei das Anschlagsmittel (109) mit dem Lamellenträger (40) gekoppelt ist,
- wobei der zweite Reibpartner (60) axial verschiebbar gegenüber dem Lamellenträger (40) ist,
- wobei axial zwischen dem Koppelmittel (109) und der Anpresseinrichtung (105) die Begrenzungseinrichtung (125) angeordnet ist,
- wobei das Koppelmittel (109) ausgebildet ist, die Begrenzungseinrichtung (125) abzustützen.

7. Kupplungseinrichtung (10) nach einem der Ansprüche 1 bis 6,
- wobei ein Anschlagsmittel (830) und eine Nabe (80) vorgesehen ist,
- wobei das Anschlagsmittel (830) mit der Nabe (80) gekoppelt ist,
- wobei der Lamellenträger (40) drehmomentschlüssig mit dem zweiten Reibpartner (60) und drehmomentschlüssig mit der Verstärkungseinrichtung (85) verbunden ist,
- wobei die Nabe (80) drehmomentschlüssig mit der Ausgangsseite (25) verbunden ist,
- wobei die Verstärkungseinrichtung (85) eine Anpressscheibe (845) umfasst, die drehmomentschlüssig und axial verschiebbar mit der Nabe (80) gekoppelt ist,
- wobei das Anschlagsmittel (830) ausgebildet ist, die relative Verschiebbarkeit Anpressscheibe (845) gegenüber der Nabe (80) durch ein Anschlagen der Anpressscheibe (845) an dem Anschlagsmittel (830) zu begrenzen.

8. Kupplungseinrichtung (10) nach einem der Ansprüche 1 bis 7,
- aufweisend eine Nabe (80) und ein Lamellenträger (40),
- wobei der Lamellenträger (40) drehmomentschlüssig mit dem zweiten Reibpartner (60) und über die Verstärkungseinrichtung (85) drehmomentschlüssig mit der Nabe (80) verbunden ist,
- wobei die Nabe (80) drehmomentschlüssig mit der Ausgangsseite (25) verbunden ist,
- wobei der Lamellenträger (40) axial relativ verschiebbar gegenüber der Nabe (80) ist,
- wobei ein weiteres Anschlagsmittel (815) vorgesehen ist,
- wobei das weitere Anschlagsmittel (815) ausgebildet ist, die relative Verschiebbarkeit des Lamellenträgers (40) gegenüber der Nabe (80) durch ein Anschlagen des weiteren Anschlagsmittel (815) an der Verstärkungseinrichtung (85) zu begrenzen.

9. Kupplungseinrichtung (10) nach einem der Ansprüche 1 bis 8,
- wobei ein Lamellenträger (40) vorgesehen ist,
- wobei der Lamellenträger (40) drehmomentschlüssig mit dem zweiten Reibpartner (60) und der Ausgangsseite (25) verbunden ist,
- wobei ein weiteres Anschlagsmittel (620) vorgesehen ist,
- wobei die Anpresseinrichtung (105) relativ gegenüber dem Lamellenträger (40) bewegbar ist,
- wobei das weitere Anschlagsmittel (620) ausgebildet ist, durch ein Anschlagen der Anpresseinrichtung (105) an dem Lamellenträger (40) die Bewegbarkeit der Anpresseinrichtung (105) gegenüber dem Lamellenträger (40) zumindest teilweise zu begrenzen.

## Claims

1. Clutch device (10) which is mounted such that it can be rotated about a rotational axis (15), having:
- an input side (20), an output side (25), at least one friction package (50) with at least one first friction partner (55) and at least one second friction partner (60), and a boosting device (85),
- the first friction partner (55) being connected in a torque-transmitting manner to the input side (20),
- the second friction partner (60) being connected in a torque-transmitting manner to the output side (25),
- it being possible for the first and the second friction partner (55, 60) to be brought into frictional engagement by way of a pressing force (F), in order to transmit a torque (M) between the input side (20) and the output side (25),
- the output side (25) having an output shaft (65) and an output element (70),
- the output element (70) being coupled to the output shaft (65) at least in an axial direction,
- a hub (80) being provided which is connected in a torque-transmitting manner to the output shaft (65) and can be displaced axially with respect to the output shaft (65), and
- the boosting device (85) being configured to load the pressing force (F) with a boosting force (F_{A}),
- **characterized in that**
a limiting device (125) is arranged between the hub (80) and a supporting device (75),
- the limiting device (125) being configured to limit the pressing force (F) and/or the boosting force (F_{A}) at least partially, and comprising at least one spring means (300),
- the spring means (300) being configured as a compression spring or as a cup spring or as a tension spring or as a leaf spring, and being prestressed with a prestressing force which has a value which corresponds to a sum of the pressing force (F) and a predefined value of the boosting force (F_{A}).

2. Clutch device (10) according to Claim 1,
- a supporting device (75) being provided,
- the supporting device (75) being coupled to the output side (25) and being configured to provide a counterforce (F_{G}) to the pressing force (F), in order to bring about the frictional engagement between the first and second friction partner (55, 60),
- the limiting device (125) being arranged between the supporting device (75) and the friction package (50), and/or
- the limiting device (125) being arranged between the output side (25) and the supporting device (75).

3. Clutch device (10) according to Claim 1 or 2,
- a pressing device (105) being provided,
- the pressing device (105) being configured to provide the pressing force (F),
- the limiting device (125) being arranged between the friction package (50) and the pressing device (105).

4. Clutch device (10) according to one of Claims 1 to 3, the limiting device (125) being arranged between the boosting device (85) and the output side (25).

5. Clutch device (10) according to one of Claims 1 to 4,
- a multiple disc carrier (40) being provided,
- the multiple disc carrier (40) being coupled in a torque-connecting manner to the second friction partner (60) and the output side (25),
- a stop means (600) being provided,
- the stop means (600) being arranged in an adjacent manner with respect to the second friction partner (60) on a side of the second friction partner (60), which side lies opposite the spring means (300), and being coupled to the multiple disc carrier (40),
- it being possible for the second friction partner (60) to be displaced axially with respect to the multiple disc carrier (40),
- the stop means (600) being configured to limit the axial displaceability of the second friction partner (60) with respect to the multiple disc carrier (40) by way of a contact of the second friction partner (60) with the stop means (600).

6. Clutch device (10) according to one of Claims 1 to 5,
- a multiple disc carrier (40) being provided,
- the multiple disc carrier (40) being coupled in a torque-transmitting manner to the second friction partner (60) and the output side (25),
- a pressing device (105) and a coupling means (109) being provided,
- the pressing device (105) being arranged in an axially adjacent manner with respect to the friction package (50) and being configured to provide the pressing force (F),
- the stop means (109) being coupled to the multiple disc carrier (40),
- it being possible for the second friction partner (60) to be displaced axially with respect to the multiple disc carrier (40),
- the limiting device (125) being arranged axially between the coupling means (109) and the pressing device (105),
- the coupling means (109) being configured to support the limiting device (125).

7. Clutch device (10) according to one of Claims 1 to 6,
- a stop means (830) and a hub (80) being provided,
- the stop means (830) being coupled to the hub (80),
- the multiple disc carrier (40) being connected in a torque-transmitting manner to the second friction partner (60) and in a torque-transmitting manner to the boosting device (85),
- the hub (80) being connected in a torque-transmitting manner to the output side (25),
- the boosting device (85) comprising a pressing disc (845) which is coupled in a torque-transmitting and axially displaceable manner to the hub (80),
- the stop means (830) being configured to limit the relative displaceability of the pressing disc (845) with respect to the hub (80) by way of a contact of the pressing disc (845) with the stop means (830).

8. Clutch device (10) according to one of Claims 1 to 7,
- having a hub (80) and a multiple disc carrier (40),
- the multiple disc carrier (40) being connected in a torque-transmitting manner to the second friction partner (60) and via the boosting device (85) in a torque-transmitting manner to the hub (80),
- the hub (80) being connected in a torque-transmitting manner to the output side (25),
- it being possible for the multiple disc carrier (40) to be displaced axially relative to the hub (80),
- a further stop means (815) being provided,
- the further stop means (815) being configured to limit the relative displaceability of the multiple disc carrier (40) with respect to the hub (80) by way of a contact of the further stop means (815) with the boosting device (85).

9. Clutch device (10) according to one of Claims 1 to 8,
- a multiple disc carrier (40) being provided,
- the multiple disc carrier (40) being connected in a torque-transmitting manner to the second friction partner (60) and the output side (25),
- a further stop means (620) being provided,
- it being possible for the pressing device (105) to be moved relative to the multiple disc carrier (40),
- the further stop means (620) being configured to limit the movability of the pressing device (105) with respect to the multiple disc carrier (40) at least partially by way of a contact of the pressing device (105) with the multiple disc carrier (40).

## Revendications

1. Dispositif d'embrayage (10) apte à être monté à rotation autour d'un axe de rotation (15) et présentant :
un côté d'entrée (20), un côté de sortie (25), au moins un paquet de friction (50) qui présente au moins un premier partenaire de friction (55) et au moins un deuxième partenaire de friction (60), ainsi qu'un dispositif d'amplification (85),
le premier partenaire de friction (55) étant relié au côté d'entrée (20) de manière solidaire en termes de couple de rotation,
le deuxième partenaire de friction (60) étant relié au côté de sortie (25) de manière solidaire en termes de couple de rotation,
le premier et le deuxième partenaire de friction (55, 60) pouvant être amenés à s'engager par friction par une force de poussée (F) pour transmettre un couple de rotation (M) entre le côté d'entrée (20) et le côté de sortie (25),
le côté de sortie (25) présentant un arbre de sortie (65) et un élément de sortie (70),
l'élément de sortie (70) étant accouplé à l'arbre de sortie (65) au moins dans une direction axiale,
un moyeu (80) relié de manière solidaire en termes de couple de rotation à l'arbre de sortie (65) et apte à coulisser axialement par rapport à l'arbre de sortie (65) étant prévu,
le dispositif d'amplification (85) étant configuré pour appliquer la force de poussée (F) avec une force d'amplification (F_{A}),
**caractérisé en ce que**
un dispositif de limitation (125) est disposé entre le moyeu (80) et un dispositif de soutien (75),
**en ce que** le dispositif de limitation (125) est configuré pour limiter au moins partiellement la force de poussée (F) et/ou la force d'amplification (F_{A}) et comportant au moins un moyen élastique (300),
le moyen élastique (300) étant configuré comme ressort de compression, ressort à plateaux, ressort de traction ou ressort à lames et étant précontraint par une force de précontrainte dont la valeur correspond à la somme de la force de poussée (F) et d'une valeur prédéfinie de la force d'amplification (F_{A}).

2. Dispositif d'embrayage (10) selon la revendication 1, dans lequel un dispositif de soutien (75) est prévu,
le dispositif de soutien (75) étant accouplé au côté de sortie (25) et configuré pour délivrer une force opposée (F_{G}) à la force de poussée (F) pour entraîner l'engagement par friction entre le premier et le deuxième partenaire de friction (55, 60),
le dispositif de limitation (125) étant disposé entre le dispositif de soutien (75) et le paquet de friction (50) et/ou
le dispositif de limitation (125) étant disposé entre le côté de sortie (25) et le dispositif de soutien (75).

3. Dispositif d'embrayage (10) selon les revendications 1 ou 2, dans lequel un dispositif de poussée (105) est prévu,
le dispositif de poussée (105) étant configuré pour appliquer la force de poussée (F) et
le dispositif de limitation (125) étant disposé entre le paquet de friction (50) et le dispositif de poussée (105).

4. Dispositif d'embrayage (10) selon l'une des revendications 1 à 3, dans lequel le dispositif de limitation (125) est disposé entre le dispositif d'amplification (85) et le côté de sortie (25).

5. Dispositif d'embrayage (10) selon l'une des revendications 1 à 4, dans lequel un porte-lamelles (40) est prévu,
le porte-lamelles (40) étant accouplé de manière solidaire en termes de couple de rotation au deuxième partenaire de friction (60) et au côté de sortie (25),
un moyen de butée (600) étant prévu,
le moyen de butée (600) étant disposé en position adjacente au deuxième partenaire de friction (60) sur un côté du deuxième partenaire de friction (60) opposé au moyen élastique (300) et étant accouplé au porte-lamelles (40),
le deuxième partenaire de friction (60) pouvant coulisser axialement par rapport au porte-lamelles (40) et
le moyen de butée (600) étant configuré pour limiter la capacité de coulissement axial du deuxième partenaire de friction (60) par rapport au porte-lamelles (40) par butée du deuxième partenaire de friction (60) contre le moyen de butée (600).

6. Dispositif d'embrayage (10) selon l'une des revendications 1 à 5, dans lequel un porte-lamelles (40) est prévu,
le porte-lamelles (40) étant accouplé de manière solidaire en termes de couple de rotation au deuxième partenaire de friction (60) et au côté de sortie (25),
un dispositif de poussée (105) et un moyen d'accouplement (109) étant prévus,
le dispositif de poussée (105) étant disposé en position axialement adjacente au paquet de friction (50) et configuré pour appliquer la force de poussée (F),
le moyen d'accouplement (109) étant accouplé au porte-lamelles (40),
le deuxième partenaire de friction (60) pouvant coulisser axialement par rapport au porte-lamelles (40),
le dispositif de limitation (125) étant disposé axialement entre le moyen d'accouplement (109) et le dispositif de poussée (105) et
le moyen d'accouplement (109) étant configuré pour soutenir le dispositif de limitation (125).

7. Dispositif d'embrayage (10) selon l'une des revendications 1 à 6, dans lequel un moyen de butée (830) et un moyeu (80) sont prévus,
le moyen de butée (830) étant accouplé au moyeu (80),
le porte-lamelles (40) étant relié de manière solidaire en termes de couple de rotation au deuxième partenaire de friction (60) et de manière solidaire en termes de couple de rotation au dispositif d'amplification (85),
le moyeu (80) étant relié de manière solidaire en termes de couple de rotation au côté de sortie (25),
le dispositif d'amplification (85) comprenant un disque de poussée (845) accouplé de manière solidaire en termes de couple de rotation et à coulissement axial au moyeu (80),
le moyen de butée (830) étant configuré pour limiter la possibilité de coulissement relatif entre le disque de poussée (845) et le moyeu (80) par butée du disque de poussée (845) contre le moyen de butée (830).

8. Dispositif d'embrayage (10) selon l'une des revendications 1 à 7,
présentant un moyeu (80) et un porte-lamelles (40),
le porte-lamelles (40) étant relié de manière solidaire en termes de couple de rotation au deuxième partenaire de friction (60) et de manière solidaire en termes de couple de rotation au moyeu (80) au moyen du dispositif d'amplification (85),
le moyeu (80) étant relié de manière solidaire en termes de couple de rotation au côté de sortie (25),
le porte-lamelles (40) pouvant coulisser axialement par rapport au moyeu (80),
un autre moyen de butée (815) étant prévu,
l'autre moyen de butée (815) étant configuré pour limiter la possibilité de coulissement relatif entre le porte-lamelles (40) et le moyeu (80) par butée de l'autre moyen de butée (815) contre le dispositif d'amplification (85).

9. Dispositif d'embrayage (10) selon l'une des revendications 1 à 8,
un porte-lamelles (40) étant prévu,
le porte-lamelles (40) étant relié au deuxième partenaire de friction (60) et au côté de sortie (25) de manière solidaire en termes de couple de rotation,
un autre moyen de butée (620) étant prévu,
le dispositif de poussée (105) pouvant se déplacer par rapport au porte-lamelles (40),
l'autre moyen de butée (620) étant configuré pour limiter au moins en partie la possibilité de déplacement du dispositif de poussée (105) par rapport au porte-lamelles (40) par butée du dispositif de poussée (105) contre le porte-lamelles (40).
